# EUROPEAN PATENT APPLICATION

(11) **EP 4 138 045 A1**
(43) Date of publication of application: **22.02.2023**
(21) Application number: 22184546.4
(22) Date of filing: 12.07.2022
(51) Int. Cl.: G06V 10/764, G06V 10/82, G06V 20/40, H04N 19/107, H04N 19/179, H04N 19/142, H04N 19/172, H04N 19/21, G06N 3/04, G06N 3/08, H04N 19/23

(54) **RESOURCE-EFFICIENT VIDEO CODING AND MOTION ESTIMATION**

(30) Priority: 20.08.2021 US 202117407384
(71) Applicant: INTEL Corporation, Santa Clara, CA 95054 (US)
(72) Inventor: GURUVA REDDIAR, Palanivel, Chandler, AZ, 85249 (US); NAIR, Praveen P., Gilbert, AZ, 85233 (US); MEHMOOD, Arshad, Penang, 14110 Bandar Cassia (PK); SUNDARAM PRIYA, Jainaveen, Hillsboro, 97123 (US); AHUJA, Vikas, 110088 Delhi (IN); SAIFEE, Shabbir Abbasali, 560035 Bangalore (IN)
(74) Representative: Maiwald GmbH

(57) **Abstract**

In one embodiment, a compute device includes interface circuitry and processing circuitry. The processing circuitry receives, via the interface circuitry, a current frame of a video stream to be encoded. The processing circuitry then determines whether a scene change occurs at the current frame. If a scene change occurs at the current frame, the processing circuitry detects the scene in the current frame by performing pixel segmentation on the current frame. If a scene change does not occur at the current frame, the processing circuitry detects the scene in the current frame by performing motion estimation on the current frame relative to a previous frame in which the scene was detected. Based on the scene detected in the current frame, the processing circuitry then generates one or more encoding parameters and provides those parameters to a video encoder to encode the current frame.

## Description

### FIELD OF THE SPECIFICATION

This disclosure relates in general to the field of video processing, and more particularly, though not exclusively, to resource-efficient video coding and motion estimation.

### BACKGROUND

Video processing tasks-such as video encoding, motion estimation, and video analytics-typically consume a significant amount of compute resources, particularly when high levels of activity are occurring in the field-of-view of a camera. Thus, in some cases, resource-constrained devices may struggle to perform these video processing tasks due to the demanding compute requirements. As a result, resource-constrained devices may have to rely on less sophisticated algorithms with significantly reduced performance to perform these video processing tasks. While this enables resource-constrained devices to perform certain video processing tasks that they may otherwise be unable to perform, it typically comes with a significant performance hit.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIG. 1** illustrates an example computing infrastructure for processing video streams in accordance with certain embodiments.
**FIG. 2** illustrates an example implementation of a media enhancement unit for Al-assisted video encoding in accordance with certain embodiments.
**FIG. 3** illustrates an example embodiment of a media enhancement framework for an object detection and tracking use case.
**FIG. 4** illustrates an example of a segmented frame generated by performing scene understanding on an example video clip.
**FIG. 5** illustrates a performance graph for various video encoding modes.
**FIG. 6** illustrates a flowchart for encoding a video stream in accordance with certain embodiments.
**FIG. 7** illustrates an example embodiment of a system for performing a full motion vector search.
**FIGS. 8A-B** illustrate an example of a motion vector search performed using an array of symmetric compute elements.
**FIGS. 9A-D** illustrate example aspects of the memory management for a full motion vector search.
**FIG. 10** illustrates a flowchart for performing a full motion vector search in accordance with certain embodiments.
**FIGS. 11A-B** illustrate examples of compute nodes in accordance with certain embodiments.
**FIG. 12** illustrates an overview of an edge cloud configuration for edge computing.
**FIG. 13** illustrates operational layers among endpoints, an edge cloud, and cloud computing environments.
**FIG. 14** illustrates an example approach for networking and services in an edge computing system.
**FIG. 15** illustrates deployment of a virtual edge configuration in an edge computing system operated among multiple edge nodes and multiple tenants.
**FIG. 16** illustrates a computer and communication use case involving mobile access to applications in an edge computing system.
**FIG. 17** illustrates an example mobile edge system reference architecture, arranged according to an ETSI Multi-Access Edge Computing (MEC) specification.
**FIG. 18** illustrates an example software distribution platform to distribute software.

### EMBODIMENTS OF THE DISCLOSURE

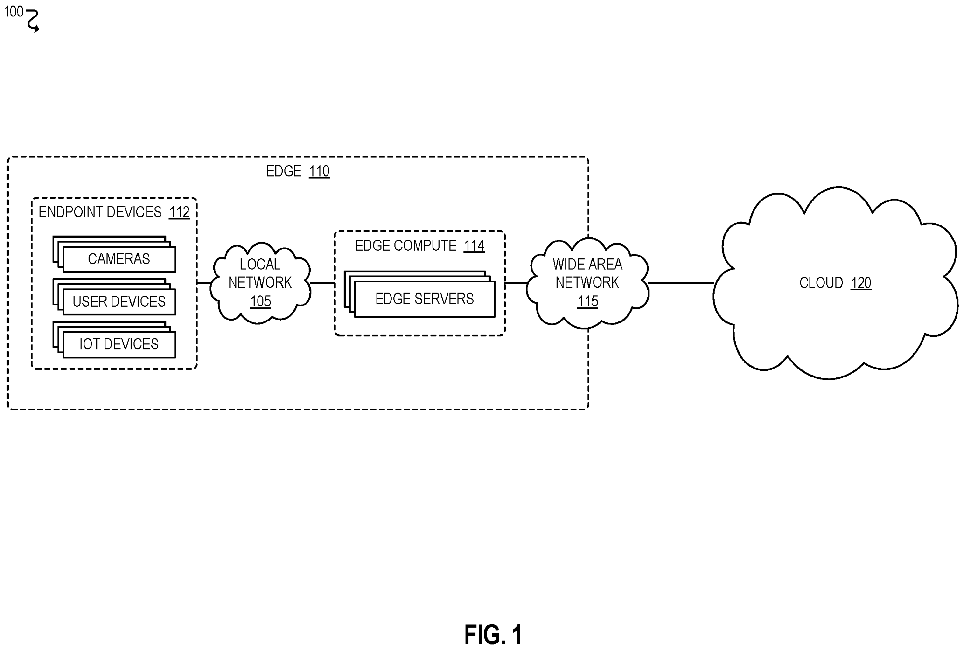

**FIG. 1** illustrates an example computing infrastructure 100 for processing video streams in accordance with certain embodiments. In the illustrated example, the computing infrastructure 100 includes an edge infrastructure 110 and a cloud infrastructure 120, which are communicatively coupled via a wide area network (WAN) 115 (e.g., the Internet). The edge infrastructure 110 includes edge or endpoint devices 112 and edge compute resources 114, which are communicatively coupled via a local network 105 (e.g., a wired and/or wireless network, such as a WiFi mesh network). The endpoint devices 112 may include smart cameras, user devices (e.g., mobile phones, tablets, wearable devices, personal computers), and/or Internet-of-Things (loT) devices, among other examples. The edge compute resources 114 may include edge servers and/or other edge processing resources or infrastructure. In some embodiments, for example, the edge compute resources 114 may be part of a multi-access edge computing (MEC) infrastructure. The cloud infrastructure 130 may include cloud computing servers, application servers, storage servers, and so forth.

In the illustrated computing infrastructure 100, some or all of the endpoint devices 112 may include camera(s) to capture and/or stream video content to various destinations for analysis and/or consumption (e.g., viewing) in real time. For example, a video stream captured by a camera of an endpoint device 112 may be encoded (e.g., by the endpoint device 112 and/or the edge compute resources 114), transmitted or streamed to one or more destinations, and then subsequently decoded to analyze or consume the video content. Video processing tasks-such as video encoding, motion estimation, and/or video analytics-typically consume a significant amount of compute resources, however, particularly when high levels of activity are occurring in the field-of-view of the camera.

As a result, due to the typical resource constraints of edge devices 110 (e.g., endpoint devices 112, edge compute resources 114), those devices may become overloaded and/or may be unable to handle the video processing load. Moreover, offloading the processing further along on the edge or in the cloud is often problematic due to the latency requirements of many video streaming applications.

Thus, in some cases, less sophisticated algorithms with reduced performance may be used to perform certain video processing tasks. For example, video streams may be encoded using video coding and/or motion estimation algorithms that are less complex and provide lower video quality and/or compression efficiency. Similarly, video analytics may be performed using less complex algorithms that provide reduced accuracy. Thus, these solutions enable resource-constrained devices to perform certain video processing tasks that they may otherwise be unable to perform, but they currently come at the expense of significantly reduced performance (e.g., reduced compute performance resulting in a lower frame rate and/or reduced video quality).

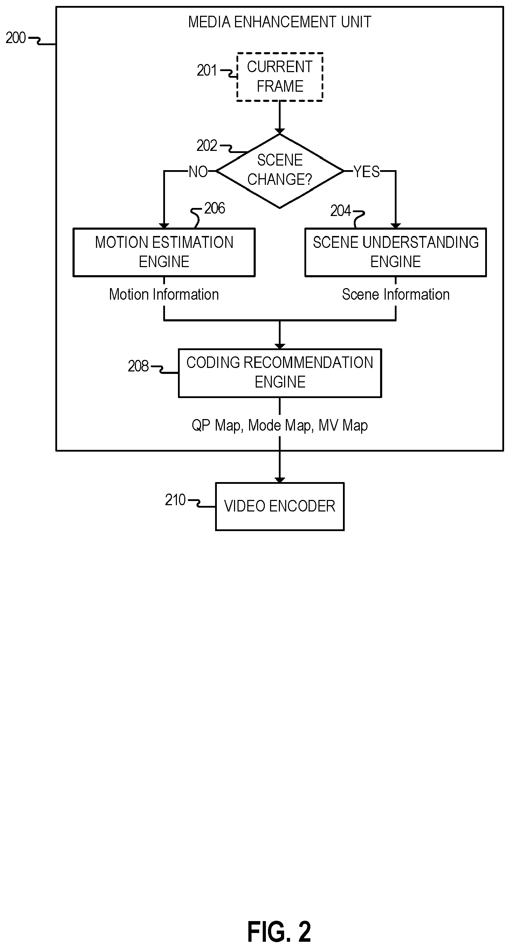

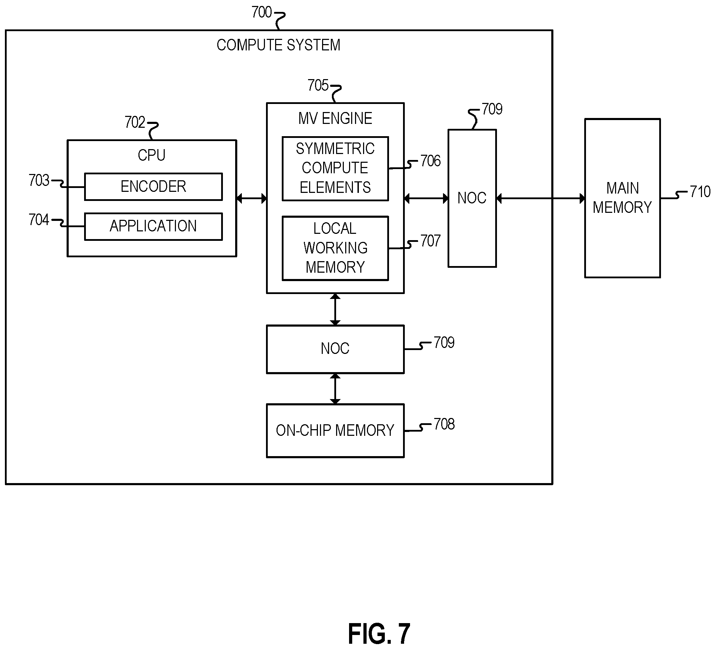

Accordingly, this disclosure presents embodiments of video coding and motion estimation solutions that provide improved performance on resource-constrained devices. For example, an Al-assisted video coding solution is described in connection with FIGS. 2-6, and a full search motion estimation solution is described in connection with FIGS. 7-10. Thus, in various embodiments, edge devices 110 (e.g., endpoint devices 112, edge compute resources 114) and/or other components of computing infrastructure 100 may implement any or all aspects of the video coding and motion estimation solutions described throughout this disclosure.

### Resource-efficient video coding using artificial intelligence

Video transcode refers to the process of converting video data from one format to another with the goal of reducing the size of the compressed video bitstream. A smaller compressed bitstream provides several advantages, including savings on storage space due to reduced storage requirements, the ability to accommodate more users in the bandwidth spectrum, and smooth playback on the receiver-end with less buffering requirements, among other advantages.

In datacenters with high-performance compute processors (e.g., multi-core CPUs, GPUs, accelerators), the transcode process can employ compute-intensive techniques, such as multi-pass encode, to compress video data with very high efficacy. These complex encode methods are often infeasible on resource-constrained devices, however, such as low-power edge vision processors and accelerators. As a result, resource-constrained devices typically need to employ a compute-conservative approach using other low-complexity video encoding techniques. These low-complexity encoding techniques often suffer from various performance limitations, however, such as low compression ratios, reduced video quality, and so forth.

As an example, two pass encoding with lookahead processing is a commonly used video encoding technique that achieves high compression ratios. When using this technique, before encoding a particular frame, multiple future frames (e.g., 40 frames) are analyzed to gather the scene understanding, and the scene understanding is then used to compress the frame more effectively. This process is repeated for every single frame in the video stream.

While two pass lookahead encoding achieves high compression ratios and video quality, it also has various disadvantages, including high processing latency, power requirements, and performance requirements. For example, because multiple frames (e.g., 40) need to be analyzed before encoding each frame, and the analysis typically requires both spatial and temporal correlation measurements, this technique often has high processing latency. Moreover, encoding each frame requires multiple future frames to be read from memory (e.g., 40 lookahead frames), which translates to high power consumption. Further, as part of the analysis of each frame, compute-intensive processes-such as motion estimation and rate-distortion optimization (RDO)-must be performed for multiple frames (e.g., 40), which results in high performance requirements.

By contrast, single pass encoding is a video encoding technique that analyzes incoming frames in a single pass and compresses each frame independently or with reference to previously encoded frame(s). As a result, single pass encoding is less complex and more resource efficient than other higher complexity methods (e.g., two pass encoding), which makes it more suitable for resource-constrained devices. On the other hand, single pass encoding also has various disadvantages, such as low compression ratios and poor video quality. For example, the size of the bitstream will be larger compared to other methods, which limits the number of users that can be accommodated in the bandwidth spectrum. Similarly, the quality of the compressed video will be inferior compared to other methods, which may result in an unsatisfactory user experience on the receiving end.

As another example, artificial intelligence (Al) techniques can also be used to perform video encoding. For example, one or multiple deep learning topologies can be employed to analyze incoming video frames and learn how to encode or compress the frames efficiently. In some cases, for example, the deep learning topologies may include autoencoders, variational autoencoders, generative/discriminative models, generative adversarial networks (GAN), and so forth.

These Al-based encoding techniques have various disadvantages. For example, the resultant video bitstreams are not standards compliant, and as a result, matching decoder implementations are required at the receiving end to decode the bitstreams. In addition, AI processing (and deep learning in particular) requires extensive compute operations, which translates into high processing latency and stringent performance requirements. Further, the deep learning architectures used to understand and compress the video frames include numerous layers, with large weights on each layer, which results in extremely high memory and power requirements.

Accordingly, this disclosure presents embodiments of an Al-assisted video coding solution for resource-constrained devices (e.g., edge devices). The described solution is significantly more resource efficient than other high-complexity encoding techniques (e.g., two pass lookahead encoding) and higher performing than other low-complexity encoding techniques (e.g., standard single pass encoding). As a result, this solution strikes an ideal balance between resource efficiency and video encoding performance (e.g., compression ratio, video quality), which makes it optimal for resource-constrained devices.

In particular, this disclosure presents embodiments of a codec-agnostic, standards-compliant, pixel-segmentation-based video transcoder that achieves improved compression ratios and video quality on resource-constrained devices, such as low power edge vision accelerators. For example, a pixel-segmentation-based approach is used to understand each scene of a video (e.g., by recognizing content within the scene), and the scene understanding is employed during the encode process to improve the compression efficiency and/or video quality. Instead of performing pixel segmentation on every frame of a video, however, it is only performed for a subset of frames, such as each frame at which a scene change is detected (e.g., the first frame of each scene in the video). For the remainder of the frames, motion estimation may be employed to understand the scene in those frames based on their estimated motion relative to reference frame(s) from the same scene.

This video coding solution provides numerous advantages. For example, this solution is a codec-agnostic, vendor-agnostic, and standards-compliant solution, which means the resultant bitstreams are decodable by any standards-compliant decoder. Moreover, because pixel segmentation is only performed when there is a scene change, the additional processing latency will be significantly less compared to other methods where scene understanding is performed for all frames. Similarly, since the scene understanding process is only applied for a limited number of frames, the compute latency will also be significantly less compared to other methods. In addition, the motion information and scene understanding information can be used to compute encoding decisions and parameters (e.g., encoding mode decisions, quantization parameters, motion vectors), thus reducing the compute cycles on the video encoder while improving the video quality. This solution can also serve as a complimentary unit to existing hardware encoders, thus leveraging the hardware assets by providing additional information/decisions to the encoder. As a result, this solution improves compression efficiency while maintaining the video quality and user experience for a single-pass low-power edge video encoder.

**FIG. 2** illustrates an example implementation of a media enhancement unit (MEU) 200 for Al-assisted video encoding in accordance with certain embodiments. In various embodiments, MEU 200 may be implemented using any type or combination of circuitry for performing the described functionality, whether implemented as a standalone processing unit operating alongside other compute hardware, or integrated as part of other compute hardware, such as CPUs, GPUs, hardware video encoders/transcoders, AI/ML accelerators (e.g., vision processing units (VPUs)), FPGAs, ASICs, and/or any other general-purpose or special-purpose processing components.

In the illustrated embodiment, the MEU 200 processes each frame 201 of a video stream to derive recommended encoding parameters for the video encoder 210 to use when encoding the frame 201. The processing of each frame 201 begins at the scene change detection engine 202, which determines whether a scene change (e.g., new scene) occurs at the current frame. For example, if the current frame is the first frame in the video stream, it may be treated as a scene change or new scene. Otherwise, the current frame may be compared to one or more previous frames-such as the immediately preceding frame-to determine whether a scene change occurs. In some embodiments, for example, the current frame and the preceding frame are subsampled at a lower resolution, and the subsampled frames are then compared to determine whether they depict the same scene or different scenes (e.g., based on the similarities/differences among the subsampled frames).

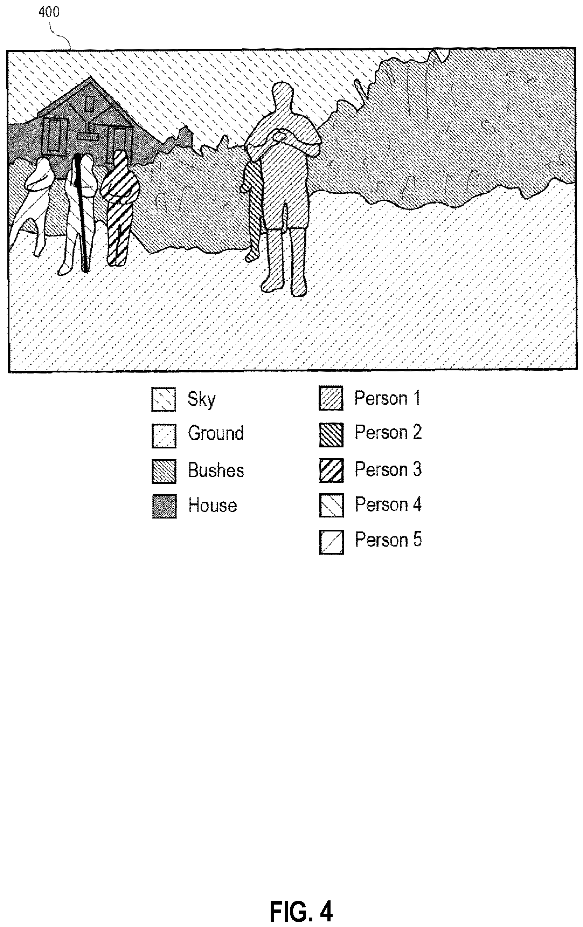

If a scene change is detected, the scene understanding engine 204 is invoked to better understand the content depicted in the new scene. In some cases, for example, the scene understanding engine 204 may perform pixel-segmentation-based AI processing (e.g., panoptic segmentation) on the current frame 201 to detect the content depicted in the new scene (e.g., as shown and described further in connection with FIG. 4).

In other cases, however, a content detection or scene recognition workload may have already been executed on the frame 201 in connection with a particular video analytics application or use case. For example, a video surveillance application on a smart camera may perform content detection or scene recognition on each frame 201 in real time to detect or recognize items of interest, such as people, objects (e.g., packages), regions of interest, and so forth. Accordingly, rather than executing a duplicative AI or computer vision workload, the scene understanding engine 204 reuses the existing results of the previously-executed workload to detect the relevant items or regions of interest in the frame 201.

In various embodiments, the scene understanding engine 204 may represent the resulting scene information as a segmentation mask or map, a segmented frame (e.g., a frame with a segmentation mask), a scene map or scene metadata, and/or any other data type or data format suitable for representing the content detected in the scene.

The resulting scene information is then provided to the coding recommendation engine (CRE) 208, which consumes the scene information and uses additional information-such as encoder statistics about the previous frame(s) and the remaining amount of bits available-to generate encoding recommendations and parameters for encoding the current frame 201. For example, based on the content detected in the scene, the CRE 208 may generate and/or tailor various encoding parameters (e.g., quantization parameters, encoding modes, motion vectors) to achieve certain performance objectives, such as varying the compression rate and/or video quality for different regions of the frame 201, reducing the compute/encoding latency, and so forth.

As an example, the CRE 208 may generate a quantization parameter (QP) map identifying quantization parameters for different regions of the frame 201. In some embodiments, the QP map is sized at smaller blocks within the frame 201, such as 8x8 blocks, and contains a corresponding quantization parameter for encoding each block. For example, the QP map may contain negative QP entries for blocks of the frame 201 that should be encoded using more bits (e.g., lesser the QP value, higher the number of bits) and positive QP entries for blocks that should be encoded using less bits (e.g., higher the QP value, lesser the number of bits). In this manner, the QP map instructs the encoder 210 to allocate more bits for encoding certain regions of the frame 201 (e.g., blocks containing objects or items of interest in the scene foreground) and less bits for encoding other regions of the frame 201 (e.g., blocks containing the scene background).

As another example, based on the segmented scene information, the CRE 208 may make decisions regarding encoding modes and partition types (e.g., prediction modes, block sizes), such as using smaller blocks (e.g., 4x4_INTRA) suited for the edges of foreground objects (e.g., the edges of each person in FIG. 4) and larger blocks (e.g., 16×16_INTRA) suited for uniform textures (e.g., the sky/ground in FIG. 4).

If a scene change is not detected by the scene detection engine 202, then the current frame 201 is part of the same scene as the previous frame. In this scenario, instead of invoking the scene understanding engine 204, the motion estimation engine 206 is invoked to estimate the motion between the current frame and a limited number of previous frames (e.g., one or two previous frames in some cases). The functionality of the motion estimation engine 206 may be implemented using any suitable algorithms and/or compute hardware for performing motion estimation and/or block matching, such as the full search motion estimation solution described in connection with FIGS. 7-10.

In some embodiments, for example, a "coarse" motion search may be performed to identify blocks in the current frame relative to the previous frame(s). For example, a block matching algorithm may be used to compare the current and previous frames, identify similar blocks within those frames, and estimate the spatial motion of those blocks from the previous frame(s) to the current frame. Moreover, motion vectors may be computed to represent the estimated spatial motion of those blocks between the respective frames.

This motion information, along with statistics collected from the encoder and the previously derived scene understanding from previous frame(s) (e.g., based on the pixel-segmentation-based AI processing performed by the scene understanding engine 204), enable the CRE 208 to compute the QP maps, mode decision maps, and motion vector maps (e.g., for inter-frame encoding with reference to other frames). This rich set of information is then fed to the encoder 210, and as a result, the existing hardware encoder 210 can compress the video frame 201 in an effective manner.

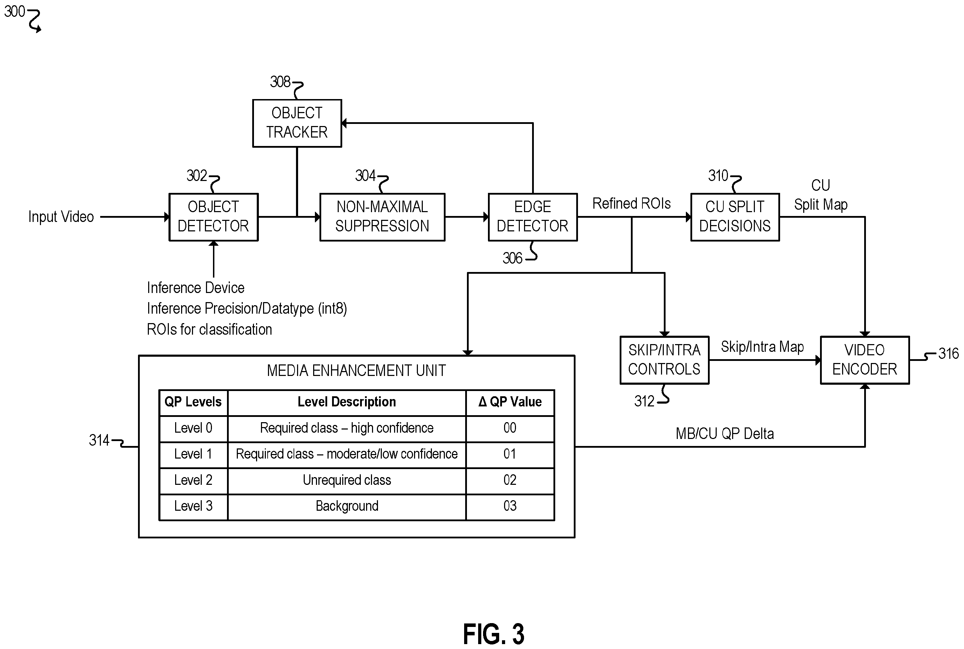

**FIG. 3** illustrates an example embodiment of a media enhancement framework 300 for an object detection and tracking use case (e.g., video surveillance). In order to have a power-efficient solution, an object detector 302 performs deep learning inference (e.g., using OpenVINO) on select frames at regular intervals to detect regions of interest (ROI) containing certain objects, and for the rest of the frames, the detected ROIs are simply tracked by an object tracker 308.

The detected/tracked ROIs will be further processed using non-maximal suppression (NMS) 304 and edge detection 306 modules. The NMS stage 304 merges multiple bounding boxes surrounding the object(s) (if any) and the edge detection stage 306 identifies the edges in the detected ROIs to shrink the bounding boxes. The detected/tracked and refined ROIs are now ready to be consumed for further processing. It should be noted that most or all of the processing performed up to this point is typically executed as part of the underlying use case (e.g., object detection / video surveillance), which means no additional compute overhead has been introduced yet by the media enhancement unit (MEU) 314.

The ROIs are then fed to the coding unit (CU) split decisions module 310, the skip/intra controls module 312, and the MEU 314. The CU split decisions module 310 makes coding unit split decisions and generates a CU split map, and the skip/intra controls module 312 makes intra mode and/or intra skip decisions and generates a skip/intra map.

The MEU 314 converts the ROI information into various encoder knobs, such as the QP map, mode map, motion vector map, etc. The MEU algorithm relies upon various factors, such as the size of the detected ROIs, confidence level of the AI algorithm, encoder statistics (e.g., the size and/or quality of the previously encoded frame, etc.) to create these various maps.

For video transcode use cases, the same general framework is used, but instead of object detection and tracking, pixel-wise segmentation is performed. The segmented pixels, along with the metadata describing the relationship between the segmentation ID and the region, will be fed to the MEU 314. Similar to the previous case, the MEU 314 utilizes several factors, such as the statistics for previously encoded frame(s), the area of the segmented regions, etc., to arrive at the custom QP maps along with the other maps and parameters.

The various encoding maps and parameters (e.g., QP map, mode map, motion vector map, CU split map, skip/intra map) are then fed to the video encoder 316, where they are used to encode the current video frame.

**FIG. 4** illustrates an example of a segmented frame 400 generated by performing scene understanding (e.g., pixel segmentation) on an example video clip. In some embodiments, for example, the segmented frame 400 may be output by the scene understanding engine 204 of media enhancement unit (MEU) 200 of FIG. 2.

In the illustrated example, the segmented frame 400 shows the items detected in the depicted scene, including the background, foreground, and individual objects. For example, the segmented frame 400 identifies the sky, the ground, bushes, a house, and five different people detected in the scene.

In some embodiments, for example, the segmented frame 400 may be represented as a segmentation map or mask that labels each pixel in the frame with the corresponding item to which that pixel belongs. For example, the segmentation map/mask may be a multi-dimensional array with the same or similar dimensions as the frame itself, where each element of the array contains a label for a corresponding pixel (or group of pixels) in the frame.

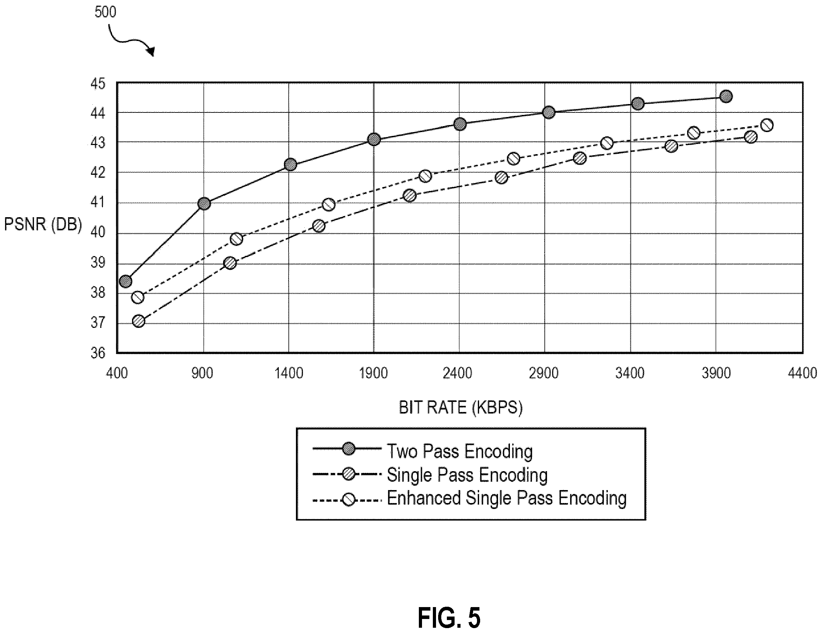

**FIG. 5** illustrates a performance graph 500 for various video encoding modes. In particular, graph 500 compares the rate distortion (RD) curves for enhanced single pass encoding (e.g., the described solution) with standard single pass encoding and two pass encoding for an example video clip with a resolution of 1920x1080 at 30 frames per second (fps). In the illustrated example, the RD curves plot the peak signal-to-noise ratio (PSNR) (decibels (dB)) at varying bit rates (kilobits per second (Kbps)) for the various encoding modes. As shown in graph 500, enhanced single pass encoding has a higher PSNR than standard single pass encoding, which means the compression error is smaller and the video quality is higher.

Moreover, a comparison of the Bjontegaard delta bit rate (BD-BR) for standard and enhanced single pass encoding versus two pass encoding is shown in Table 1. As shown in Table 1, enhanced single pass encoding improves the video quality over standard single pass encoding by 37.12% in low bit rate scenarios and 26.16% in high bit rate scenarios, where low bit rate scenarios range from 500 Kbps - 2 Mbps and high bit rate scenarios range from 2.5 Mbps - 4 Mbps with a step size of 500 Kbps.

While two pass encoding achieves the highest video quality in these performance comparisons, it should be noted that two pass encoding requires lookahead processing on 40 frames for every encoded frame, while enhanced single pass encoding only requires scene recognition processing (e.g., pixel segmentation) on one frame per scene. Thus, since the example video clip in these performance comparisons only has one scene, enhanced single pass encoding only requires scene recognition processing to be performed once on the first frame of the video clip. In other words, enhanced single pass encoding only requires additional AI scene recognition processing on a single frame throughout the entire duration of the clip, while two pass encoding requires lookahead processing on 40 frames for every encoded frame in the clip.

**Table 1: Bjontegaard delta bit rate (BD-BR) comparison for various encoding solutions**

| **Mode** | **% BD-BR (Low BR)** | **% BD-BR (High BR)** |
|---|---|---|
| Single Pass Encode | 110.71 | 105.924 |
| Enhanced Single Pass Encode | 69.29 | 78.21 |
| % Improvement | 37.2 | 26.16 |

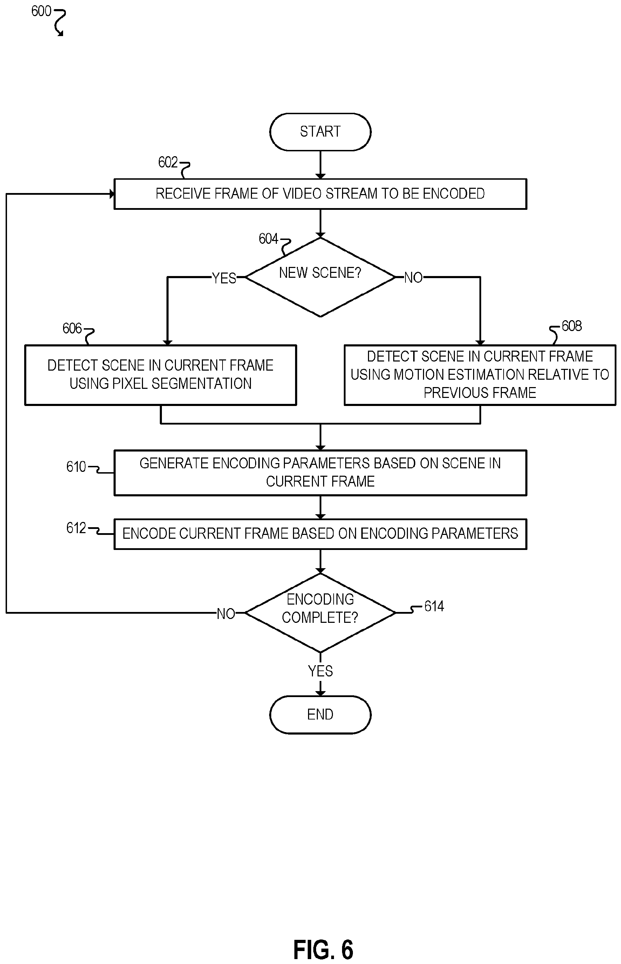

**FIG. 6** illustrates a flowchart 600 for encoding a video stream in accordance with certain embodiments. In various embodiments, flowchart 600 may be implemented and/or performed by or using the computing devices, platforms, and systems described throughout this disclosure.

In some embodiments, for example, flowchart 600 may be implemented and/or performed by or using a compute device with circuitry to capture, receive, and/or encode frames of a video stream. For example, the compute device may include some combination of sensor circuitry (e.g., cameras, microphones, and/or other vision/audio sensors), interface circuitry (e.g., I/O circuitry, communication circuitry, network interface circuitry, communication interfaces/links), and/or processing circuitry (e.g., processors, processor cores, multi-core processors, central processing units (CPUs), graphics processing units (GPUs), vision processing units (VPUs), video encoders/decoders/transcoders, media enhancement units (MEUs), FPGA/ASIC accelerators).

Moreover, in some embodiments, the compute device may be, include, or otherwise be part of an integrated circuit device such as a general-purpose or special-purpose processor (e.g., CPU, GPU, VPU, video encoder/transcoder, artificial intelligence accelerator, media enhancement unit (MEU)) and/or a System-on-a-Chip (SoC); a user device such as a mobile and/or wireless device (e.g., mobile phone, tablet), personal computer (e.g., laptop/desktop computer), wearable device (e.g., smart watch, smart glasses, augmented reality (AR) and/or virtual reality (VR) headset), or digital media player (e.g., video streaming device); a smart camera; a compute server (e.g., cloud or edge server appliance); an Internet-of-Things (loT) device; a smart appliance (e.g., smart lock, smart doorbell, speaker, wireless router, television, refrigerator, washer/dryer, heating-ventilation-air conditioning (HVAC) system); a robot, drone, and/or autonomous vehicle; and/or smart city infrastructure (e.g., security/surveillance camera/system, traffic monitoring/control system, weather monitoring system), among many other examples.

In the illustrated embodiment, the flowchart begins at block 602 by receiving a current frame of a video stream to be encoded. In this context, the current frame refers to a particular frame of a video stream that is currently being processed and/or encoded (e.g., relative to any previous frames in the stream that have already been processed/encoded and any future frames in the stream that have not yet been processed/encoded), whether from a live video stream or a previously captured/generated video stream.

For example, the video stream may include a sequence of frames containing video and/or media content, which may be captured by a camera, generated by a processor (e.g., graphics generated by a GPU), stored or cached on a storage device, and so forth. Thus, in some embodiments, the compute device may receive each frame from a camera, processor, and/or another device or component (e.g., which may either be part of or separate from the compute device) via interface circuitry and/or over a network.

The flowchart then proceeds to block 604 to determine whether a new scene (e.g., a scene change) occurs at the current frame. Any suitable approach may be used to identify scene changes. In some embodiments, for example, if the current frame is the first frame in the video stream, it may be treated as a new scene or scene change. Otherwise, the current frame may be compared to one or more previous frames to determine or detect whether a scene change occurs. In some embodiments, for example, the current frame and one or more previous frames may be subsampled at a lower resolution, and the subsampled frames may then be compared to determine whether they depict the same scene or different scenes (e.g., based on the similarities/differences among the subsampled frames). Alternatively, in some embodiments, a video stream may include metadata identifying scene changes.

If it is determined that a scene change occurs at the current frame, the flowchart proceeds to block 606 to detect the scene in the current frame by performing pixel segmentation. For example, pixel segmentation may be performed on the current frame to detect one or more items in the frame (e.g., physical objects or "things") and identify the pixels corresponding to those items.

In some embodiments, for example, the items may be detected using one or more trained machine learning models, such as one or more convolutional neural networks (CNNs) trained to detect those items. In various embodiments, however, any suitable visual processing, artificial intelligence, and/or machine learning techniques may be used to detect items and/or recognize content in the scene depicted in a frame of a video stream, including convolutional neural networks (CNNs) (e.g., Inception/ResNet CNN architectures) and other deep learning neural networks or feed-forward artificial neural networks, pattern recognition, scale-invariant feature transform (SIFT), principal component analysis (PCA), discrete cosine transforms (DCT), and so forth.

Moreover, labels may be assigned to some or all of the pixels in the current frame to identify the detected item corresponding to each pixel. For example, based on the item(s) detected in the current frame, a segmentation map or mask of the frame may be generated to represent the scene captured in the frame. As an example, if the scene captured in a frame includes the beach, ocean, and sky, the segmentation map may identify the pixels in the frame that correspond to each of those items.

In some embodiments, for example, the segmentation map or mask may be a multi-dimensional array with the same or similar dimensions as the frame itself, where each element of the array contains a corresponding label for a particular pixel (or group of pixels) in the frame. For example, the segmentation map/mask may be a two-dimensional (2D) array of labels with the same height and width as the frame, where each label in the segmentation map/mask identifies the detected item for a corresponding pixel within the frame located at the same spatial offset or indices as the label. Alternatively, or additionally, the segmentation map/mask may be added to the frame as an additional dimension.

If it is determined that a scene change does not occur at the current frame (e.g., the current frame and preceding frame correspond to the same scene), the flowchart proceeds to block 608 to detect the scene in the current frame using motion estimation. In particular, the scene in the current frame may be detected by performing motion estimation on the current frame relative to one or more previous frames in which the scene was detected. In some embodiments, motion estimation may be performed using the full search motion estimation solution described in connection with FIGS. 7-10.

For example, the scene may have been detected in a previous frame by performing pixel segmentation (block 606) or motion estimation (block 608) on the previous frame to generate a segmentation map of the scene content in the previous frame. Moreover, since the current frame and previous frame are part of the same scene, the scene content in the current frame may be determined by estimating the motion of the scene content from the previous frame to the current frame.

For example, the current frame and previous frame may be compared to identify similar blocks within the frames (e.g., using a block matching algorithm) and determine the estimated spatial motion of those blocks from the previous frame to the current frame. In some embodiments, for example, motion vectors may be computed to represent the estimated motion of blocks in the current frame relative to the previous frame.

In this manner, the scene content detected in the previous frame may be used in conjunction with the motion information for the current frame to predict the scene content captured in the current frame. For example, the motion vectors computed for blocks of the current frame can be used to identify the spatial location of similar blocks in the previous frame. Moreover, a segmentation map of the scene content in the previous frame can be used to determine whether the similar blocks in the previous frame contain any detected items of interest. In this manner, if the similar blocks in the previous frame contain any detected items of interest, then the corresponding blocks in the current frame are also presumed to contain those items.

The flowchart then proceeds to block 610 to generate one or more encoding parameters based on the scene detected in the current frame. In particular, information about the scene depicted in the current frame may be leveraged to optimize certain encoding parameter(s) used to encode the frame. For example, the encoding parameter(s) may include quantization parameters, encoding mode parameters, and/or motion vector parameters, among other examples. Moreover, these parameters may be tailored or adjusted based on the scene detected in the current frame to achieve certain performance objectives, such as improving the compression rate and/or video quality, reducing the compute/encoding time, and so forth.

For example, a video stream is typically encoded by partitioning each frame of the stream into multiple blocks (e.g., macroblocks) and then separately encoding each block using an intra prediction mode (e.g., intra-frame encoding) or an inter prediction mode (e.g., inter-frame encoding). An intra prediction mode may be used to encode a block independently from, or without reference to, any other blocks or frames, while an inter prediction mode may be used to encode a block dependently on, or with reference to, another similar block in the same frame or a different frame. In some embodiments, for example, an inter prediction mode may encode a block by identifying another similar or matching block in the same frame or a different frame (e.g., using a block matching algorithm), computing the differences/residual between the respective blocks, and/or computing a motion vector representing the estimated spatial motion between the blocks within their respective frame(s).

Moreover, each block may be compressed by performing a transform on its corresponding data (e.g., performing a discrete cosine transform (DCT) on the block pixel/residual data) and then quantizing the resulting transform coefficients based on a corresponding quantization parameter (QP). In particular, quantization reduces the precision of the transform coefficients according to the quantization parameter (QP), which typically leaves many coefficients with a value of zero and a few with non-zero values. In this manner, the quantization parameter controls the compression rate and image quality of a compressed block or frame, which impacts the number of bits that are allocated to and consumed by the compressed block/frame. For example, a quantization parameter with a high value may produce more zero coefficients, which may result in a higher compression rate at the expense of lower image/video quality when the stream is decoded. On the other hand, a quantization parameter with a low value may leave more non-zero coefficients, which may result in higher image/video quality when the stream is decoded at the expense of a lower compression rate.

Moreover, in some embodiments, the scene detected in the current frame can be used to generate and/or optimize various parameter(s) used to encode the frame, such as quantization parameters, encoding mode parameters (e.g., prediction mode, block size), motion vector parameters, and so forth.

In some cases, for example, the scene detected in the current frame may be leveraged to generate optimized quantization parameter(s) for encoding the frame. For example, the quantization parameters-which control compression rate and image quality-are indicative of the number of bits that are allocated or consumed for encoding a frame and/or individual blocks within the frame. Moreover, in some cases, the quantization parameters may be optimized to achieve varying compression rates and/or image quality for different blocks of the frame based on the scene content detected in those blocks. As an example, blocks of the frame containing items or objects of interest in the foreground of the scene (e.g., people, cars) may be encoded using a lower quantization parameter to achieve better compressed image quality, while blocks that exclusively contain the background of the scene (e.g., the sky, ground) may be encoded using a higher quantization parameter to achieve a better compression rate.

In some embodiments, for example, a quantization parameter (QP) map may be used to specify or indicate the quantization parameters to use for encoding the respective blocks. For example, the QP map may identify a corresponding quantization parameter to use for encoding each block of the frame, which may indicate the compression rate, quality, and/or number of bits to be allocated or consumed for encoding that block.

As another example, the scene detected in the current frame may be leveraged to generate optimized encoding mode parameter(s) for encoding the frame. The encoding mode parameter(s) may indicate encoding mode(s) to use for encoding the frame and/or individual blocks within the frame. In some embodiments, for example, the encoding mode parameters may indicate the prediction modes and/or block sizes to use for encoding the respective blocks. For example, the prediction modes may include one or more intra prediction modes for intra-frame encoding and/or one or more inter prediction modes for inter-frame encoding, as discussed above.

Moreover, in some cases, the encoding mode parameters may be optimized to achieve varying compression rates and/or image quality for different blocks of the frame based on the scene content detected in those blocks. As an example, a smaller block size may be used to encode portions of the frame containing items or objects of interest in the foreground of the scene (e.g., people, cars), while a larger block size may be used to encode portions of the frame that contain the background of the scene (e.g., the sky, ground).

In some embodiments, a mode map may be used to specify or indicate the encoding modes-such as prediction modes and/or block sizes-for the respective blocks of a frame. For example, the mode map may identify a corresponding encoding mode (e.g., prediction mode, block size) to use for encoding each block of the frame.

As another example, the scene detected in the current frame may be leveraged to generate motion vector parameter(s) for encoding the frame. The motion vector parameters may identify motion vectors and/or reference blocks to use for encoding blocks in the current frame that will be encoded using inter-frame encoding (e.g., blocks encoded with reference to other similar reference blocks using motion estimation in an inter prediction mode). For example, the motion vectors may indicate an estimated motion of the respective blocks in the current frame relative to similar blocks in one or more previous frames.

In some cases, for example, the motion vectors computed at block 608 (e.g., when performing motion estimation to detect the scene in the current frame) may be reused to encode the frame. For example, as explained above, if no scene change occurs at block 604, then at block 608, motion estimation is performed to detect the scene in the current frame relative to one or more previous frame(s), which may involve computing one or more motion vectors indicating the estimated motion between the respective frames. Moreover, these motion vectors computed for scene detection purposes may be subsequently reused as parameters to encode the current frame. For example, a video encoder may use the motion vectors to encode certain blocks of the current frame with reference to similar blocks of the previous frame(s) using inter-frame encoding. In this manner, the video encoder avoids having to recompute the motion vectors at the encoding stage.

In some embodiments, a motion vector (MV) map may be used to specify or indicate the motion vectors and/or reference frames to use for encoding the respective blocks of the current frame. For example, the MV map may identify a corresponding motion vector and/or reference block to use for each block of the current frame that will be encoded using an inter prediction mode.

The flowchart then proceeds to block 612 to encode the current frame based on the generated encoding parameters. In some embodiments, for example, the generated encoding parameters may be provided to a hardware and/or software video encoder to perform the encoding. For example, the encoding parameters may be supplied as optional or recommended parameters, required parameters, or some combination thereof. The video encoder then uses the encoding parameters to encode the current frame using a particular video codec.

In this manner, by simply generating optimized encoding parameters and supplying them to the video encoder, this is a standards-compliant solution that can be used with any available video codec. Non-limiting examples of video codecs that may be used with this solution include: H.264 Advanced Video Coding (AVC); H.265 High-Efficiency Video Coding (HEVC); H.266 Versatile Video Coding (VVC); AV1; VP1 - VP9; MPEG-4; and/or DivX.

The flowchart then proceeds to block 614 to determine whether encoding of the video stream is complete. For example, if the video stream contains additional frame(s) that have not yet been encoded, the encoding may be incomplete, and the flowchart may proceed back to block 602 to continue encoding the next frame in the video stream.

Alternatively, if the video stream has been fully encoded (e.g., all frames-or all currently available frames-have been encoded), the encoding may be complete. At this point, the flowchart may end. In some embodiments, however, the flowchart may restart and/or certain blocks may be repeated. For example, in some embodiments, the flowchart may restart at block 602 to continue encoding frames of the same or another video stream.

### Resource-efficient full search motion estimation

A motion vector (MV) is often used as a metric of displacement of a block in frames in a video sequence. Finding a motion vector-also referred to as motion estimation (ME)-is one of the fundamental operations in video encoding and has various other applications, such as object tracking. There are various algorithms for finding a motion vector, such as Sum of Absolute Difference (SAD), Sum of Absolute Transform Difference (SATD), and Structure Similarity Index Measure (SSIM), among others.

The best motion vector can typically be found if a block in the current frame is searched against the full area of a reference frame. However, due to computational complexity and high memory bandwidth requirements for full search MV algorithms, no known hardware microarchitectures exist in systems-on-a-chip (SoCs) that can support real-time applications.

Since there are no full search MV implementations in SoC hardware that support real-time requirements, partial search algorithms are typically used, such as pyramidical search and pattern search. In a pyramidical search, the search area is downsampled N number of times. The best matching block is found in N iterations starting from the most downsampled image to the original image. For example, downsampled image N is searched in its entirety, but when the search moves to downsampled image N-1, only the relevant portion in N-1 corresponding to a match in N is searched, thus reducing the compute required at each iteration. In a pattern search, the reference frame is logically broken and searched hierarchically in various predetermined patterns for a maximum N number of chosen iterations.

These solutions have various disadvantages. For example, the use of an approximate or partial search rather than a full search results in a loss of accuracy, which is unacceptable for certain use cases, such as dense optical flow for ultra-low light scenarios, action recognition, and so forth. Moreover, full search MV algorithms implemented in software consume substantial CPU compute cycles and high memory bandwidth. On the other hand, full search MV algorithms implemented in hardware are relatively uncommon due to the expense in terms of hardware area and memory bandwidth. For example, while FPGA-based full search MV algorithms can be implemented, they are realized at a high cost of power and area.

Accordingly, this disclosure presents a full-search motion estimation microarchitecture for real-time video processing in edge products using symmetric compute and efficient memory organization. In some embodiments, for example, a compute device or system (e.g., a system-on-a-chip (SoC)) organizes a symmetric compute array with local memory and optimizes memory organization to perform full search motion estimation (e.g., finding the best motion vector) while minimizing DRAM bandwidth (e.g., using the local memory and potentially the central SRAM of an SoC).

The local memory and compute element search area is partitioned by the microarchitecture so that:
(1) It can be fed to symmetric compute elements in a way that does not starve compute despite optimizing local working memory and DRAM bandwidth;
(2) It leads to minimal DRAM access; and
(3) Local central SRAM in the SoC can be used for caching to reduce DRAM bandwidth.

This solution provides numerous advantages. For example, the microarchitecture solution enables independent hardware in an SoC to find the best matching MV at a reasonable cost of chip area and DRAM bandwidth. This results in higher quality results and savings of cost and power. Moreover, the microarchitecture is independent of the particular MV search algorithm used to generate the metric for deciding the best MV (e.g., Sum of Absolute Difference, Sum of Absolute Transform Difference, Structural Similarity Matrix), which means any MV search algorithm can be used.

The microarchitecture hardware also runs independent of any video coding standard or encoder hardware used to perform video encoding, which enables it to provide better MV search capabilities than existing encoders. As a result, the microarchitecture improves the overall video encode quality for an application since a motion vector is generated based on a full search and video encode cost function.

The microarchitecture also includes the ability to support true motion, which enables use cases like object tracking and action recognition by generating the true motion vector without the need for a dedicated encoder (e.g., saving chip area) nor software-based motion vector searching on the CPU (e.g., saving CPU bandwidth and power).

Further, the microarchitecture can leverage programmable threshold logic to support early termination of motion vector searching to improve the search time, generate motion vectors for different block sizes based on application requirements, generate a confidence value with each motion vector to enable a consuming application to make better decisions, generate object-based motion vectors instead of only block-based motion vectors, and dynamically change the search area or range based on tracking history to save time and improve accuracy.

**FIG. 7** illustrates an example embodiment of a system 700 for performing a full motion vector search. In the illustrated embodiment, system 700 is implemented as a system-on-a-chip (SoC) with a microarchitecture that uses an array of symmetric compute elements 706, as well as memory organization using a combination of local working memory and the SoC's central cache 708, to meet high compute and memory requirements in real time.

System 700 includes a central processing unit (CPU) 702, a motion vector (MV) engine 705, an on-chip memory 708, and a network-on-chip (NoC) 709. The NoC 709 communicatively couples the various components of system 700 and further couples system 700 to main memory 710. In some embodiments, main memory 710 may include dynamic random access memory (DRAM), and on-chip memory 708 may include static random access memory (SRAM), such as central SRAM of an SoC.

The MV engine 705 includes a symmetric compute array 706 and a local working memory 707. The symmetric compute array 706 includes an array of symmetric compute elements that are each capable of performing a motion vector search using a particular search algorithm, such as Sum of Absolute Difference (SAD), Sum of Absolute Transform Difference (SATD), Structure Similarity Index Measure (SSIM), and so forth. The source and reference pixels required to calculate a motion vector are fetched from main memory 710 (e.g., DRAM) and stored in local working memory 707 and/or on-chip memory 708. In some cases, for example, to reduce the size of the local working memory 707 used for motion vector calculations, and to reduce traffic to main memory 710, the on-chip memory 708 of the SoC is used as temporary storage.

A motion vector generated by MV engine 705 can be provided to the CPU 702, a video encoder 703, and/or any application 704 in hardware/software that uses a motion vector as a seed for further compute (e.g., a video analytics application that performs object tracking and action recognition).

For use cases with a high resolution and/or frame rate (e.g., 4K resolution at 60 fps, 8K resolution at 30 fps, and beyond), full search algorithms can be implemented on system 700 with a reasonable cost of area and memory bandwidth. This microarchitecture can also be scaled to achieve higher resolution and frames-per-second (fps) requirements (e.g., by increasing the number of compute or processing elements in the symmetric compute array 706). Moreover, the microarchitecture of system 700 is independent of the underlying MV search algorithms, such as SAD, SATD, and SSIM, all of which have optimum implementations in the symmetric compute elements 706 on this microarchitecture.

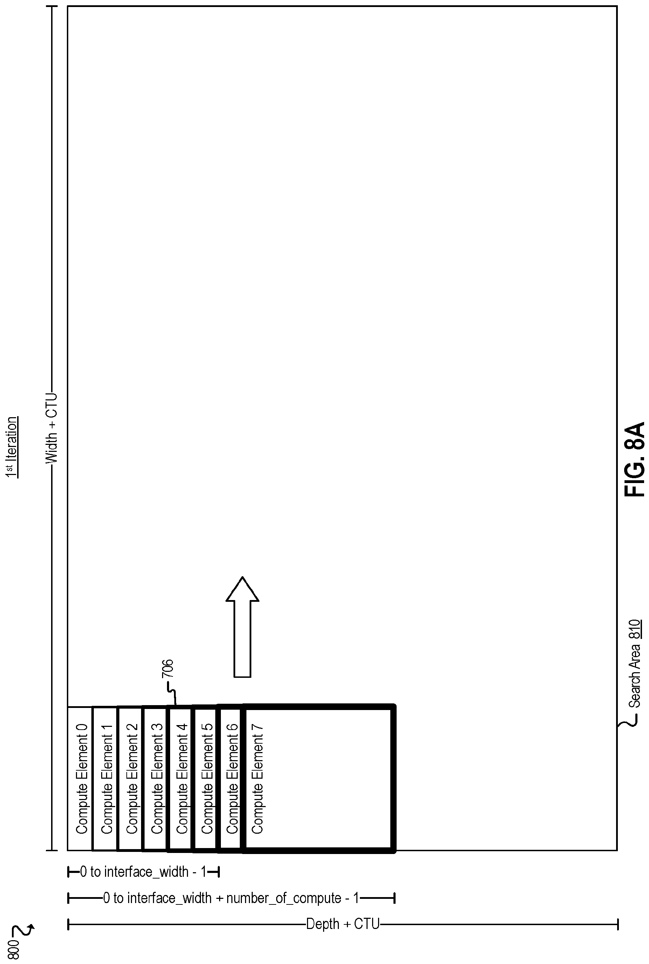

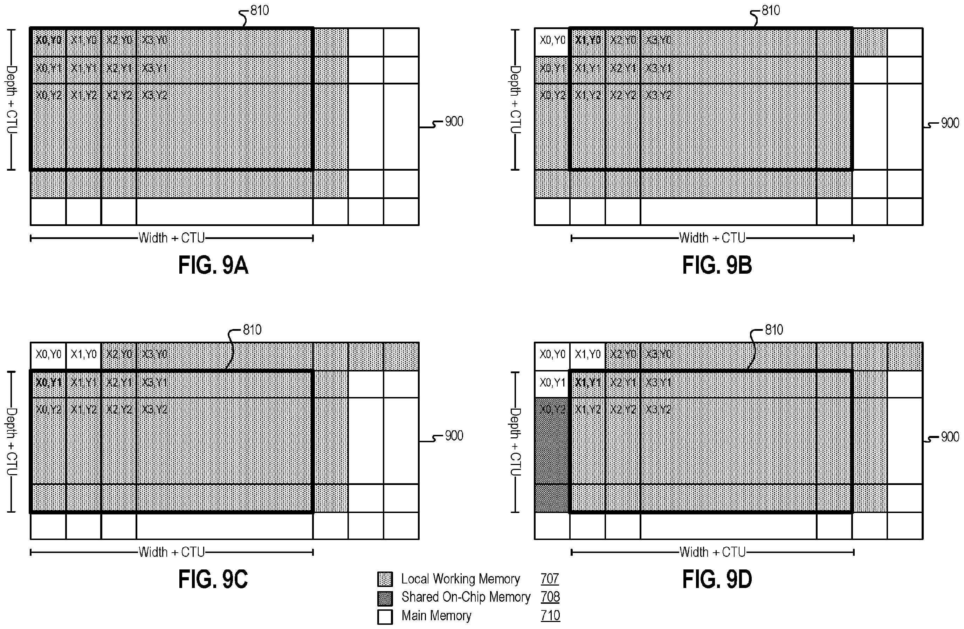

There are two parts to the microarchitecture of system 700. The first part addresses how to keep the symmetric compute elements busy with a minimal memory footprint, which is shown and described in connection with FIGS. 8A-B. The second part addresses how memory management with SoC on-chip memory 708 (e.g., SRAM) for caching is used to optimize memory traffic, which is shown and described in connection with FIGS. 9A-D.

For example, **FIGS. 8A-B** illustrate an example of a motion vector search 800 performed using an array of symmetric compute elements 706. In particular, the illustrated example shows how the symmetric compute elements 706 are kept busy with a minimal memory footprint during the search.

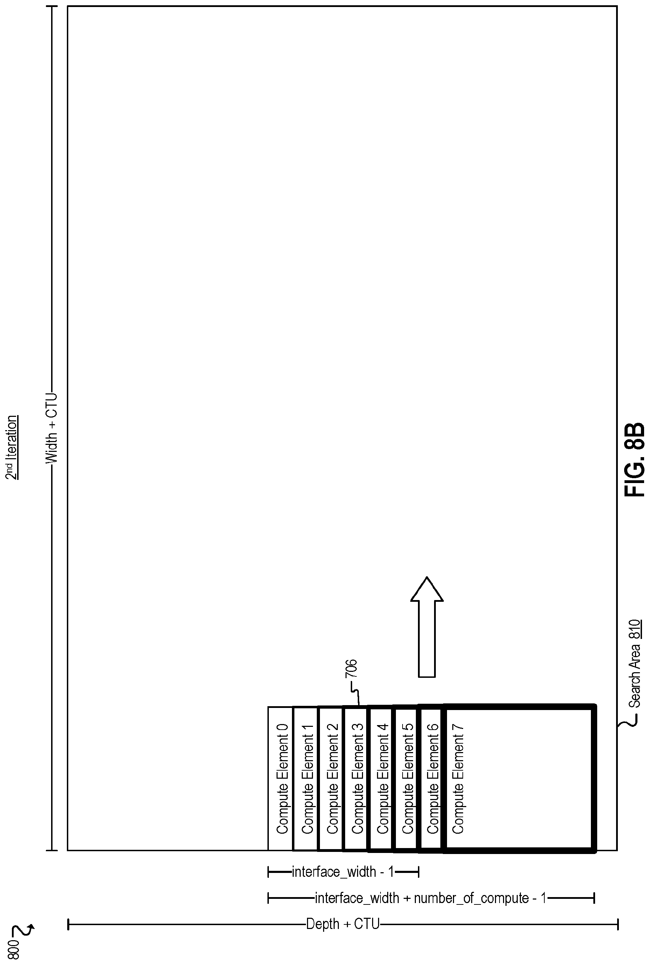

In the illustrated example, a search area 810 within a reference frame is searched for a particular block, or coding tree unit (CTU), that best matches a target block or CTU of a current frame. In particular, the target CTU is compared to the CTUs at every possible offset within the search area 810 using a block matching algorithm (e.g., SAD, SATD, SSIM) to determine which CTU in the search area 810 is most similar to the target CTU. The search is performed progressively over multiple iterations until the entire area 810 has been searched and the closest matching CTU has been found. In the illustrated example, the 1^{st} iteration of the search is shown in FIG. 8A and the 2^{nd} iteration of the search is shown in FIG. 8B.

The search begins by loading the target CTU from the current frame into the compute elements 706 and then progressively feeding the search area 810 to the compute elements 706 over multiple iterations until the entire area has been searched. The dimensions of the search area 810 are 'Width' x 'Depth' plus an extension equal to the width/depth of one CTU along each dimension to account for straddling at the edges during the search. Thus, the search area fed across multiple compute elements 706 is (Width+CTU) x (Depth+CTU). The appropriate number of compute elements is a function of the compute capacity of a single compute unit and the maximum compute rate required based on the video resolution and number of frames per second (fps).

In the illustrated example, eight units of compute 706 are shown (e.g., compute elements 0-7), each of which implements the same search algorithm (e.g., SAD, SATD, SSIM). The use of symmetric compute elements makes this architecture scalable based on the required compute. There is an overlap of interface_depth-1 between each compute element. In the illustrated example, the mechanism of feeding the compute elements 706 is shown for two iterations of the search. This approach reduces the memory footprint required to feed multiple compute elements while achieving maximum compute utilization with minimal local compute memory.

The illustrated example shows how the compute elements 706 traverse the search area 810 to find the best matching block and corresponding motion vector. All compute elements work in a lockstep manner. In the first iteration (FIG. 8A), once all compute elements are loaded with the coding unit (CU), compute element 0 traverses the columns of rows 0-31 until the end of row is reached, compute element 1 traverses the columns of rows 1-32 until the end of row is reached, and so forth, where compute element 7 traverses the columns of rows 7-39 until the end of row is reached. In the second iteration (FIG. 8B), compute element 0 traverses the columns of rows 8-40, compute element 1 traverses the columns of rows 9-41, ..., and compute element 7 traverses the columns of rows 15-47 until the end of row is reached. The search continues iterating in this manner until the end of the search area depth is reached and the entire search area 810 has been searched.

**FIGS. 9A-D** illustrate memory management aspects of a full motion vector (MV) search in accordance with certain embodiments. In particular, the illustrated example shows how the search area data in the reference frame 900 is organized in local memory 707 and shared on-chip memory 708 to optimize memory traffic for a full MV search.

Every CTU's search area 810 within the reference frame 900 in main memory 710 (e.g., DRAM) must be brought to local memory 707 near the compute elements 706 that perform the search to find the best motion vector. There is a good amount of overlap between the search area 810 of consecutive CTUs in the reference frame 900. The data is organized such that the fetch from main memory 710 does not happen twice for the same data, irrespective of the CTU being processed. This is achieved using memory organization between local memory 707 and the SoC's central on-chip scratchpad memory 708. Based on the particular use case, the tradeoff can be on the amount of local memory 707 versus central scratchpad memory 708. If local memory 707 in this microarchitecture is kept relatively small, there is a larger memory requirement and higher traffic to the central on-chip memory 708. A lesser penalty to the central on-chip memory 708 size and bandwidth requirement can be achieved at the cost of more local memory 707.

The illustrated example shows the search area and memory layout for four coordinates processed in the following order: X0,Y0 → X1,Y0 → X0,Y1 → X1,Y1 (e.g., as shown by FIGS. 9A, 9B, 9C, and 9D, respectively). If the order of processing is varied, however, then corresponding changes in sequence can be made to the example explanation below.

In the width direction, there is an overlap of 'Width-CTU' columns between adjacent coordinates. For example, X0,Y0 has an overlap of 'Width-CTU' columns of pixels with X1,Y0. The leftmost CTU columns of X0,Y0 do not overlap with X1,Y0 and the rightmost CTU columns of X1,Y0 overlap with X2,Y0. X1,Y0's overlap with X2,Y0 and X3,Y0 can also be seen the same way. In the depth direction, there is a similar overlap of 'Depth-CTU' rows between adjacent coordinates. For example, X0,Y0 and X0,Y1 have an overlap of 'Depth-CTU' rows, and so forth.

The search area for X0,Y0 also has an overlap with the search area for X0,Y2. However, due to the order of processing and limitations on the number of available compute elements, X0,Y2 cannot be processed yet even though part of its search area has already been fetched from main memory 710. As a result, the portion of the search area for X0,Y2 that has already been fetched from main memory 710 is temporarily stored in the shared on-chip memory 708, and once the compute for X0,Y2 is initiated, that portion of the search area is fetched from the shared on-chip memory 708 to avoid re-fetching the same data from main memory 710 multiple times. This significantly reduces the number of memory accesses and consumption of memory bandwidth for main memory 710 (e.g., a 50% reduction in some cases).

A rolling window implementation is used in local memory 707 as well as central on-chip memory 708. For example, while the current compute is in progress, data that is not required for the next compute is replaced with data that is required for the next compute. This maximizes usage of local memory 707.

In some embodiments, for example, the rolling window is implemented by performing the following steps:
1. Fetch the CTU from the current frame (e.g., the block of the current frame that we are searching for in the reference frame).
2. Perform the initial fetch of the search area: Fetch search data from the reference frame for four coding units (CU): Width+2^{∗}CTU × Depth+2^{∗}CTU. This is shown by the shaded area in FIG. 9A.
3. In parallel, compute the motion vector for the current coordinate and fetch the missing search area for the next coordinate:
   a. Perform the compute for X0,Y0.
   b. Fetch the next CTU from main memory 710.
4. In parallel, compute the motion vector for the current coordinate and fetch/store the search area for the next CTU:
   a. Perform the compute for X1,Y0.
   b. Fetch the top right CTUxCTU pixels of X2,Y0 and store them in local memory 707 by replacing the top left CTUxCTU pixels of X0,Y0 (e.g., as shown in FIG. 9B). This represents the rolling window in local memory 707. The initial fetch from the reference frame is from main memory 710. After the first line of the CTU is processed, the search area is fetched from a combination of main memory 710 and on-chip memory 708.
   c. Write CTUxDepth-2CTU into the shared on-chip memory 708 for the compute required for X0,Y2. This is the rolling window in the on-chip memory 708.
5. Repeat steps 3-4 until the end of the frame width is reached.
6. Repeat steps 3 - 5 for the next row of coordinates until the entire frame has been searched.
   a. In these iterations, data will be fetched from a combination of the on-chip memory 708 and main memory 710.
   b. Here is an example of step 4 above with a change of coordinates:
      i. Perform the compute for X0,Y1.
      ii. Fetch the top right CTUxCTU pixels for use in calculating X2,Y1's corner and store them in local memory 707 by replacing the top left CTUxCTU pixels of X0,Y1.
      iii. Write CTUxDepth-2CTU into the on-chip memory 708 for the compute required for X1,Y2. This is the rolling window in the on-chip memory 708.

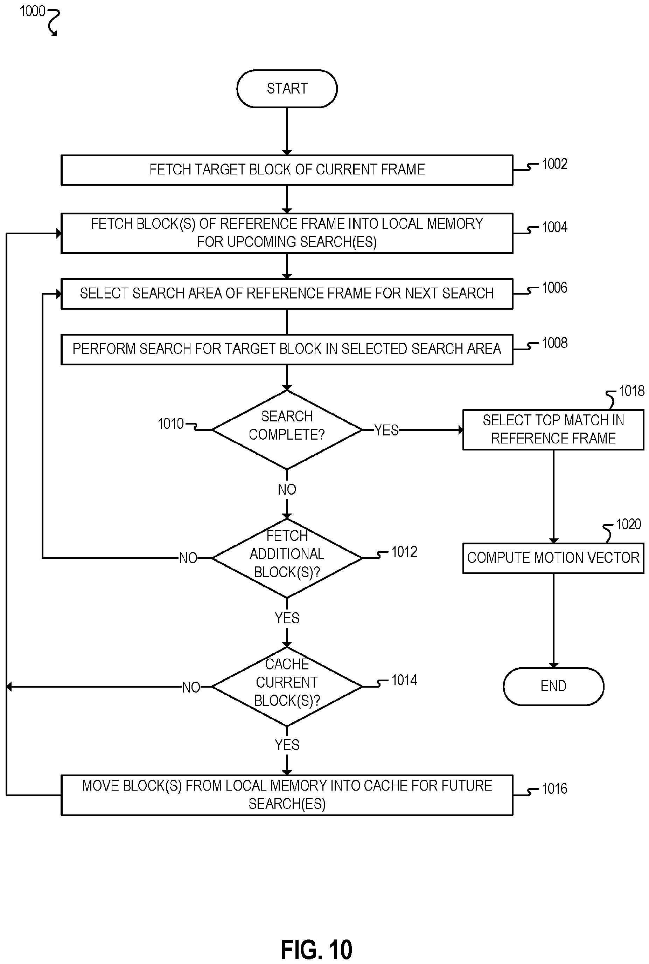

**FIG. 10** illustrates a flowchart 1000 for performing a full motion vector search in accordance with certain embodiments. In various embodiments, flowchart 1000 may be implemented and/or performed by or using the computing devices, platforms, and systems described throughout this disclosure (e.g., compute device/system 700 of FIG. 7).

The flowchart begins at block 1002 by fetching a target block of a current frame for a motion estimation search in a reference frame. For example, the target block may be a particular block or CTU of the current frame that will be used to search a reference frame for the closest matching block.

The flowchart then proceeds to block 1004 to fetch one or more blocks of the reference frame into local memory for upcoming search(es). In particular, to perform a full search of the reference frame, smaller overlapping search areas within the reference frame may be searched iteratively. Thus, the reference frame may initially be stored in main memory (e.g., DRAM), and blocks of the reference frame needed for upcoming searches may be progressively fetched from main memory into local working memory.

In some cases, blocks needed for an upcoming search may have been previously retrieved from main memory for a prior search and then subsequently cached (e.g., at block 1016) in on-chip memory (e.g., SRAM). As a result, when those blocks are needed for an upcoming search, they can be retrieved from the cache instead of main memory.

The flowchart then proceeds to block 1006 to select a search area of the reference frame for the next search. For example, the search areas for one or more upcoming searches may have been previously fetched into local memory (e.g., at block 1004), and one of those search areas may be selected for the next search.

The flowchart then proceeds to block 1008 to perform a search for the target block in the selected search area of the reference frame. For example, the target block may be compared to the respective blocks at every offset within the search a rea using a block matching algorithm to identify the most similar block in the search area.

The flowchart then proceeds to block 1010 to determine whether the search is complete. For example, the search may be complete if the entire reference frame has been searched or if an early termination condition is triggered (e.g., a sufficient match to the target block has been found based on a threshold level of similarity). Otherwise, if there are more areas of the reference frame to search, the search may not be complete.

If the search is complete, the flowchart proceeds to block 1018 to identify the best match to the target block and then to block 1020 to compute a corresponding motion vector, as explained further below.

If the search is not complete, the flowchart proceeds to block 1012 to determine whether to fetch additional block(s) of the reference frame for upcoming search(es) into local memory. For example, if some or all of the search area for an upcoming search has not already been fetched into local memory, it may need to be fetched from main memory and/or the cache before the search can be performed.

If no additional block(s) need to be fetched for an upcoming search, the flowchart proceeds back to block 1006 to select the search area for the next search.

If additional block(s) need to be fetched for an upcoming search, the flowchart proceeds to block 1014 to determine whether any current block(s) in local memory need to be cached before overwriting them with the additional block(s) that need to be fetched. For example, if any current blocks in local memory will be needed for a future search, those blocks may be temporarily cached in on-chip memory and then subsequently fetched back into local memory when they are needed again. Thus, if there are block(s) in local memory that need to be cached for a future search, the flowchart proceeds to block 1016 to move those blocks from local memory into the cache.

The flowchart then proceeds back to block 1004 to fetch the additional block(s) of the reference frame that are needed for upcoming search(es), as described above.

The flowchart continues cycling through blocks 1004-1016 until the search is complete. Upon determining that the search is complete at block 1010, the flowchart proceeds to block 1018 to select the reference block in the reference frame that best matches the target block of the current frame (e.g., based on a similarity score from the block matching algorithm).

The flowchart then proceeds to block 1020 to compute a motion vector representing the estimated spatial motion of the target block relative to the selected reference block.

At this point, the flowchart may be complete. In some embodiments, however, the flowchart may restart and/or certain blocks may be repeated. For example, in some embodiments, the flowchart may restart at block 1002 to perform another full motion vector search.

### Computing Embodiments

The following sections present examples of computing devices, platforms, systems, and environments that may be used to implement the video processing solution described throughout this disclosure.

### Computing Devices and Systems

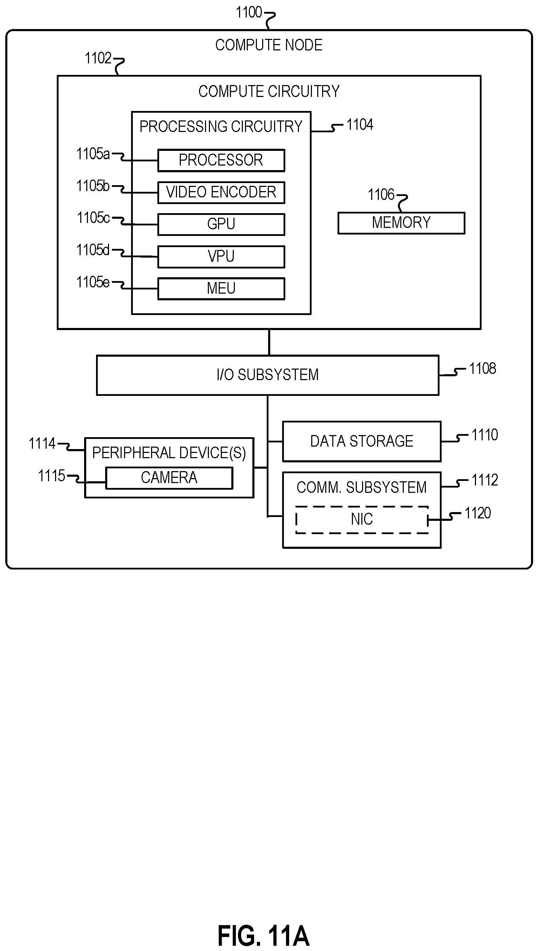

FIGS. 11A-B illustrate example embodiments of compute nodes that may be used to implement the functionality described throughout this disclosure. Moreover, in various embodiments, any of the compute nodes or compute devices discussed throughout this disclosure may be implemented or fulfilled based on the components depicted in FIGS. 11A-B. In some embodiments, for example, edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 11A, a compute node 1100 includes a compute engine 1102 (also referred to herein as "compute circuitry"), an input/output (I/O) subsystem 1108, data storage 1110, a communication circuitry subsystem 1112, and, optionally, one or more peripheral devices 1114. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1100 may be embodied as any type of engine, device, or collection of devices capable of performing various compute functions. In some examples, the compute node 1100 may be embodied as a single device such as an integrated circuit, an embedded system, a field-programmable gate array (FPGA), a system-on-a-chip (SOC), or other integrated system or device.

In the illustrative example, the compute node 1100 includes or is embodied as compute circuitry 1102, which includes processing circuitry 1104 and memory 1106. The processing circuitry 1104 may be embodied as any type or combination of processing device(s) and/or circuitry capable of performing the functions described herein (e.g., executing instructions/applications). In some embodiments, for example, the processing circuitry 1104 may include a processor 1105a, video encoder 1105b, graphics processing unit (GPU) 1105c, vision processing unit (VPU) 1105d, and/or media enhancement unit (MEU) 1105e, among other examples.

In some embodiments, the processor 1105a may be embodied as a central processing unit (CPU), a multi-core processor(s) or CPU(s), a microcontroller, a processing unit, a specialized or special purpose processing unit, or other processor or processing/controlling circuit. Moreover, in some embodiments, the processing circuitry 1104 and/or processing devices 1105a-e may include, be embodied as, or be coupled to an FPGA, an application specific integrated circuit (ASIC), reconfigurable hardware or hardware circuitry, or other specialized hardware to facilitate performance of the functions described herein. Also, in some examples, the processing circuitry 1104 and/or processing devices 1105a-e may include or be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processing circuitry 1104 and/or processing devices 1105a-e may work in coordination with each other to execute many types of operations and instructions within and on behalf of the compute node 1100.

The memory 1106 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 1106 may be integrated into the processing circuitry 1104. The memory 1106 may store various software and data used during operation such as one or more applications, data operated on by the application(s), libraries, and drivers.

The compute circuitry 1102 is communicatively coupled to other components of the compute node 1100 via the I/O subsystem 1108, which may be embodied as circuitry and/or components (e.g., interface circuitry) to facilitate input/output operations with the compute circuitry 1102 (e.g., with the processing circuitry 1104 and/or the main memory 1106) and other components of the compute node 1100. For example, the I/O subsystem 1108 may be embodied as, or otherwise include, memory controller hubs, input/output control hubs, integrated sensor hubs, firmware devices, communication links and interfaces (e.g., point-to-point links, bus links, wires, cables, light guides, printed circuit board traces, etc.), and/or other components and subsystems to facilitate the input/output operations. In some examples, the I/O subsystem 1108 may form a portion of a system-on-a-chip (SoC) and be incorporated, along with one or more of the processing circuitry 1104, the memory 1106, and other components of the compute circuitry 1102, into the compute circuitry 1102.

The one or more illustrative data storage devices 1110 may be embodied as any type of devices configured for short-term or long-term storage of data such as, for example, memory devices and circuits, memory cards, hard disk drives, solid-state drives, or other data storage devices. Individual data storage devices 1110 may include a system partition that stores data and firmware code for the data storage device 1110. Individual data storage devices 1110 may also include one or more operating system partitions that store data files and executables for operating systems depending on, for example, the type of compute node 1100.

The communication circuitry 1112 may be embodied as any type of communication circuitry, interface circuitry, device, or collection thereof, capable of enabling communications over a network between the compute circuitry 1102 and another compute device (e.g., an edge gateway of an implementing edge computing system). The communication circuitry 1112 may be configured to use any one or more communication technologies (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a loT protocol such as IEEE 802.15.4 or ZigBee^{®}, low-power wide-area network (LPWAN) or low-power wide-area (LPWA) protocols, etc.) to effect such communication.

The illustrative communication circuitry 1112 includes a network interface controller (NIC) 1120, which may also be referred to as a host fabric interface (HFI). The NIC 1120 may be embodied as one or more add-in-boards, daughter cards, network interface cards, controller chips, chipsets, or other devices that may be used by the compute node 1100 to connect with another compute device (e.g., an edge gateway node). In some examples, the NIC 1120 may be embodied as part of a system-on-a-chip (SoC) that includes one or more processors, or included on a multichip package that also contains one or more processors. In some examples, the NIC 1120 may include a local processor (not shown) and/or a local memory (not shown) that are both local to the NIC 1120. In such examples, the local processor of the NIC 1120 may be capable of performing one or more of the functions of the compute circuitry 1102 described herein. Additionally, or alternatively, in such examples, the local memory of the NIC 1120 may be integrated into one or more components of the client compute node at the board level, socket level, chip level, and/or other levels.

Additionally, in some examples, a respective compute node 1100 may include one or more peripheral devices 1114. Such peripheral devices 1114 may include any type of peripheral device found in a compute device or server such as a camera 1115, audio input devices, a display, other input/output devices, interface devices, and/or other peripheral devices, depending on the particular type of the compute node 1100. In further examples, the compute node 1100 may be embodied by a respective edge compute node (whether a client, gateway, or aggregation node) in an edge computing system or like forms of appliances, computers, subsystems, circuitry, or other components.

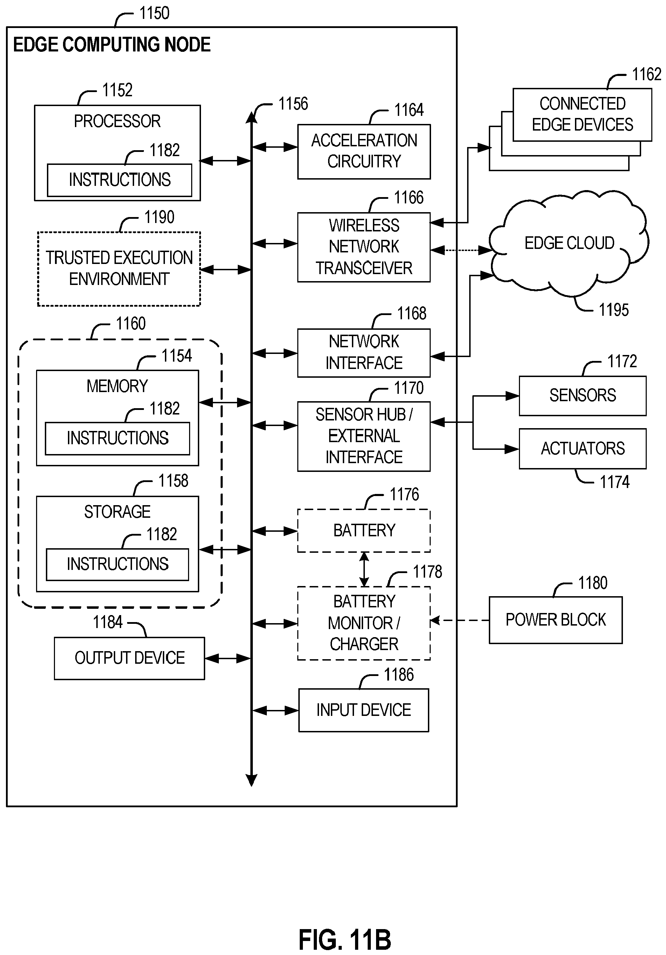

In a more detailed example, FIG. 11B illustrates a block diagram of the components that may be present in an example edge computing node 1150 for implementing the functionality (e.g., operations, processes, methods, and methodologies) described herein. This edge computing node 1150 provides a closer view of the respective components of node 1100 when implemented as or as part of a computing device (e.g., as a mobile device, a base station, server, gateway, etc.). The edge computing node 1150 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 1150, or as components otherwise incorporated within a chassis of a larger system.

The edge computing device 1150 may include processing circuitry in the form of a processor 1152, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1152 may be a part of a system on a chip (SoC) in which the processor 1152 and other components are formed into a single integrated circuit, or a single package, such as the Edison^{™} or Galileo^{™} SoC boards from Intel Corporation, Santa Clara, California. As an example, the processor 1152 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1152 and accompanying circuitry may be provided in a single socket form factor, multiple socket form factor, or a variety of other formats, including in limited hardware configurations or configurations that include fewer than all elements shown in FIG. 11B.

The processor 1152 may communicate with a system memory 1154 over an interconnect 1156 (e.g., a bus). Any number of memory devices may be used to provide for a given amount of system memory. As examples, the memory 1154 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1158 may also couple to the processor 1152 via the interconnect 1156. In an example, the storage 1158 may be implemented via a solid-state disk drive (SSDD). Other devices that may be used for the storage 1158 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1158 may be on-die memory or registers associated with the processor 1152. However, in some examples, the storage 1158 may be implemented using a micro hard disk drive (HDD). Further, any number of new technologies may be used for the storage 1158 in addition to, or instead of, the technologies described, such resistance change memories, phase change memories, holographic memories, or chemical memories, among others.

The components may communicate over the interconnect 1156. The interconnect 1156 may include any number of technologies, including industry standard architecture (ISA), extended ISA (EISA), peripheral component interconnect (PCI), peripheral component interconnect extended (PClx), PCI express (PCIe), or any number of other technologies. The interconnect 1156 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1156 may couple the processor 1152 to a transceiver 1166, for communications with the connected edge devices 1162. The transceiver 1166 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1162. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1166 (or multiple transceivers) may communicate using multiple standards or radios for communications at a different range. For example, the edge computing node 1150 may communicate with close devices, e.g., within about 10 meters, using a local transceiver based on Bluetooth Low Energy (BLE), or another low power radio, to save power. More distant connected edge devices 1162, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1166 (e.g., a radio transceiver) may be included to communicate with devices or services in a cloud (e.g., an edge cloud 1195) via local or wide area network protocols. The wireless network transceiver 1166 may be a low-power wide-area (LPWA) transceiver that follows the IEEE 802.15.4, or IEEE 802.15.4g standards, among others. The edge computing node 1150 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1166, as described herein. For example, the transceiver 1166 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1166 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1168 may be included to provide a wired communication to nodes of the edge cloud 1195 or to other devices, such as the connected edge devices 1162 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1168 may be included to enable connecting to a second network, for example, a first NIC 1168 providing communications to the cloud over Ethernet, and a second NIC 1168 providing communications to other devices over another type of network.

Given the variety of types of applicable communications from the device to another component or network, applicable communications circuitry used by the device may include or be embodied by any one or more of components 1164, 1166, 1168, or 1170. Accordingly, in various examples, applicable means for communicating (e.g., receiving, transmitting, etc.) may be embodied by such communications circuitry.

The edge computing node 1150 may include or be coupled to acceleration circuitry 1164, which may be embodied by one or more artificial intelligence (Al) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1156 may couple the processor 1152 to a sensor hub or external interface 1170 that is used to connect additional devices or subsystems. The devices may include sensors 1172, such as accelerometers, level sensors, flow sensors, optical light sensors, camera sensors, temperature sensors, global navigation system (e.g., GPS) sensors, pressure sensors, barometric pressure sensors, and the like. The hub or interface 1170 further may be used to connect the edge computing node 1150 to actuators 1174, such as power switches, valve actuators, an audible sound generator, a visual warning device, and the like.

In some optional examples, various input/output (I/O) devices may be present within or connected to, the edge computing node 1150. For example, a display or other output device 1184 may be included to show information, such as sensor readings or actuator position. An input device 1186, such as a touch screen or keypad may be included to accept input. An output device 1184 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 1150. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1176 may power the edge computing node 1150, although, in examples in which the edge computing node 1150 is mounted in a fixed location, it may have a power supply coupled to an electrical grid, or the battery may be used as a backup or for temporary capabilities. The battery 1176 may be a lithium ion battery, or a metal-air battery, such as a zinc-air battery, an aluminum-air battery, a lithium-air battery, and the like.

A battery monitor/charger 1178 may be included in the edge computing node 1150 to track the state of charge (SoCh) of the battery 1176, if included. The battery monitor/charger 1178 may be used to monitor other parameters of the battery 1176 to provide failure predictions, such as the state of health (SoH) and the state of function (SoF) of the battery 1176. The battery monitor/charger 1178 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1178 may communicate the information on the battery 1176 to the processor 1152 over the interconnect 1156. The battery monitor/charger 1178 may also include an analog-to-digital (ADC) converter that enables the processor 1152 to directly monitor the voltage of the battery 1176 or the current flow from the battery 1176. The battery parameters may be used to determine actions that the edge computing node 1150 may perform, such as transmission frequency, mesh network operation, sensing frequency, and the like.

A power block 1180, or other power supply coupled to a grid, may be coupled with the battery monitor/charger 1178 to charge the battery 1176. In some examples, the power block 1180 may be replaced with a wireless power receiver to obtain the power wirelessly, for example, through a loop antenna in the edge computing node 1150. A wireless battery charging circuit, such as an LTC4020 chip from Linear Technologies of Milpitas, California, among others, may be included in the battery monitor/charger 1178. The specific charging circuits may be selected based on the size of the battery 1176, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1158 may include instructions 1182 in the form of software, firmware, or hardware commands to implement the techniques described herein. Although such instructions 1182 are shown as code blocks included in the memory 1154 and the storage 1158, it may be understood that any of the code blocks may be replaced with hardwired circuits, for example, built into an application specific integrated circuit (ASIC).

In an example, the instructions 1182 provided via the memory 1154, the storage 1158, or the processor 1152 may be embodied as a non-transitory, machine-readable medium 1160 including code to direct the processor 1152 to perform electronic operations in the edge computing node 1150. The processor 1152 may access the non-transitory, machine-readable medium 1160 over the interconnect 1156. For instance, the non-transitory, machine-readable medium 1160 may be embodied by devices described for the storage 1158 or may include specific storage units such as optical disks, flash drives, or any number of other hardware devices. The non-transitory, machine-readable medium 1160 may include instructions to direct the processor 1152 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 1182 on the processor 1152 (separately, or in combination with the instructions 1182 of the machine readable medium 1160) may configure execution or operation of a trusted execution environment (TEE) 1190. In an example, the TEE 1190 operates as a protected area accessible to the processor 1152 for secure execution of instructions and secure access to data. Various implementations of the TEE 1190, and an accompanying secure area in the processor 1152 or the memory 1154 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1150 through the TEE 1190 and the processor 1152.

### Edge Computing Embodiments

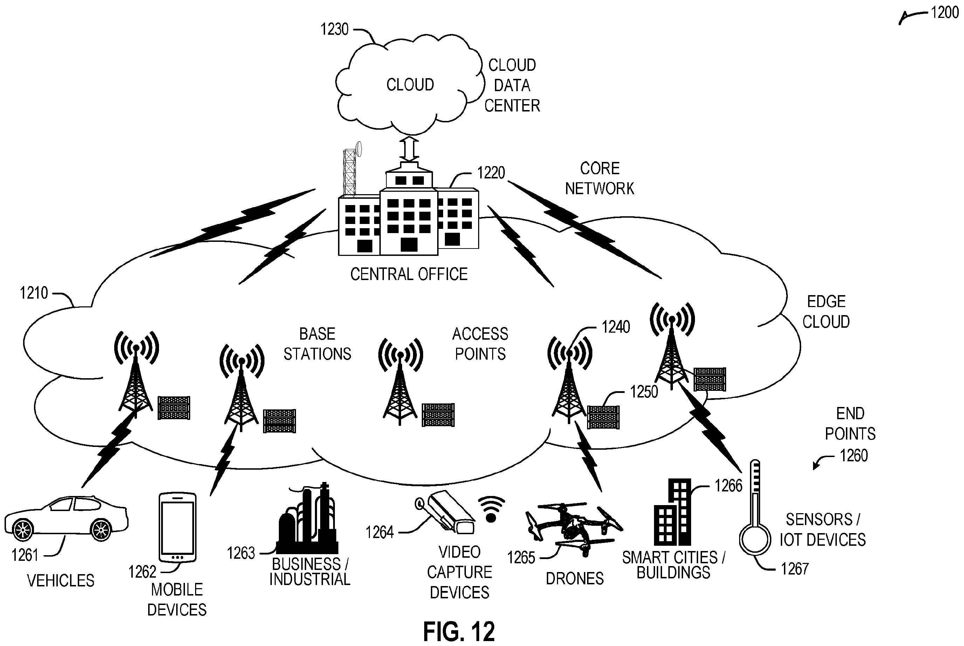

FIG. 12 is a block diagram 1200 showing an overview of a configuration for edge computing, which includes a layer of processing referred to in many of the following examples as an "edge cloud". As shown, the edge cloud 1210 is co-located at an edge location, such as an access point or base station 1240, a local processing hub 1250, or a central office 1220, and thus may include multiple entities, devices, and equipment instances. The edge cloud 1210 is located much closer to the endpoint (consumer and producer) data sources 1260 (e.g., autonomous vehicles 1261, user equipment 1262, business and industrial equipment 1263, video capture devices 1264, drones 1265, smart cities and building devices 1266, sensors and loT devices 1267, etc.) than the cloud data center 1230. Compute, memory, and storage resources which are offered at the edges in the edge cloud 1210 are critical to providing ultra-low latency response times for services and functions used by the endpoint data sources 1260 as well as reduce network backhaul traffic from the edge cloud 1210 toward cloud data center 1230 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

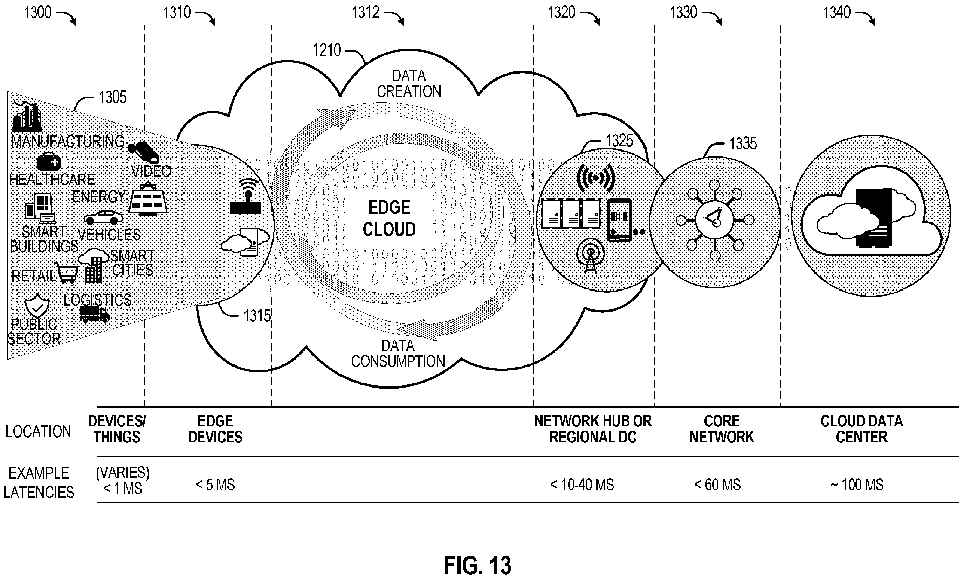

FIG. 13 illustrates operational layers among endpoints, an edge cloud, and cloud computing environments. Specifically, FIG. 13 depicts examples of computational use cases 1305, utilizing the edge cloud 1210 among multiple illustrative layers of network computing. The layers begin at an endpoint (devices and things) layer 1300, which accesses the edge cloud 1210 to conduct data creation, analysis, and data consumption activities. The edge cloud 1210 may span multiple network layers, such as an edge devices layer 1310 having gateways, on-premise servers, or network equipment (nodes 1315) located in physically proximate edge systems; a network access layer 1320, encompassing base stations, radio processing units, network hubs, regional data centers (DC), or local network equipment (equipment 1325); and any equipment, devices, or nodes located therebetween (in layer 1312, not illustrated in detail). The network communications within the edge cloud 1210 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 1300, under 5 ms at the edge devices layer 1310, to even between 10 to 40 ms when communicating with nodes at the network access layer 1320. Beyond the edge cloud 1210 are core network 1330 and cloud data center 1340 layers, each with increasing latency (e.g., between 50-60 ms at the core network layer 1330, to 100 or more ms at the cloud data center layer). As a result, operations at a core network data center 1335 or a cloud data center 1345, with latencies of at least 50 to 100 ms or more, will not be able to accomplish many time-critical functions of the use cases 1305. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 1335 or a cloud data center 1345, a central office or content data network may be considered as being located within a "near edge" layer ("near" to the cloud, having high latency values when communicating with the devices and endpoints of the use cases 1305), whereas an access point, base station, on-premise server, or network gateway may be considered as located within a "far edge" layer ("far" from the cloud, having low latency values when communicating with the devices and endpoints of the use cases 1305). It will be understood that other categorizations of a particular network layer as constituting a "close", "local", "near", "middle", or "far" edge may be based on latency, distance, number of network hops, or other measurable characteristics, as measured from a source in any of the network layers 1300-1340.

The various use cases 1305 may access resources under usage pressure from incoming streams, due to multiple services utilizing the edge cloud. To achieve results with low latency, the services executed within the edge cloud 1210 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 1210 may provide the ability to serve and respond to multiple applications of the use cases 1305 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 1210 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 1210 (network layers 1300-1340), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 1210.

As such, the edge cloud 1210 is formed from network components and functional features operated by and within edge gateway nodes, edge aggregation nodes, or other edge compute nodes among network layers 1310-1330. The edge cloud 1210 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 1210 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

The network components of the edge cloud 1210 may be servers, multi-tenant servers, appliance computing devices, and/or any other type of computing devices. For example, the edge cloud 1210 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 11B. The edge cloud 1210 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

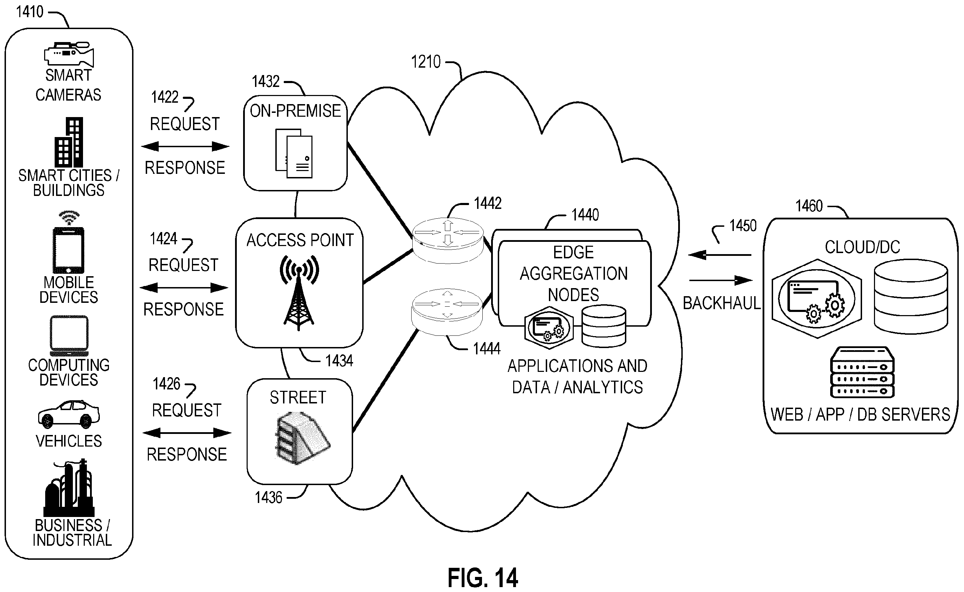

In FIG. 14, various client endpoints 1410 (in the form of smart cameras, mobile devices, computers, autonomous vehicles, business computing equipment, industrial processing equipment) exchange requests and responses that are specific to the type of endpoint network aggregation. For instance, client endpoints 1410 may obtain network access via a wired broadband network, by exchanging requests and responses 1422 through an on-premise network system 1432. Some client endpoints 1410, such as smart cameras, may obtain network access via a wireless broadband network, by exchanging requests and responses 1424 through an access point (e.g., cellular network tower) 1434. Some client endpoints 1410, such as autonomous vehicles may obtain network access for requests and responses 1426 via a wireless vehicular network through a street-located network system 1436. However, regardless of the type of network access, the TSP may deploy aggregation points 1442, 1444 within the edge cloud 1210 to aggregate traffic and requests. Thus, within the edge cloud 1210, the TSP may deploy various compute and storage resources, such as at edge aggregation nodes 1440, to provide requested content. The edge aggregation nodes 1440 and other systems of the edge cloud 1210 are connected to a cloud or data center 1460, which uses a backhaul network 1450 to fulfill higher-latency requests from a cloud/data center for websites, applications, database servers, etc. Additional or consolidated instances of the edge aggregation nodes 1440 and the aggregation points 1442, 1444, including those deployed on a single server framework, may also be present within the edge cloud 1210 or other areas of the TSP infrastructure.

### Containers in Edge Computing

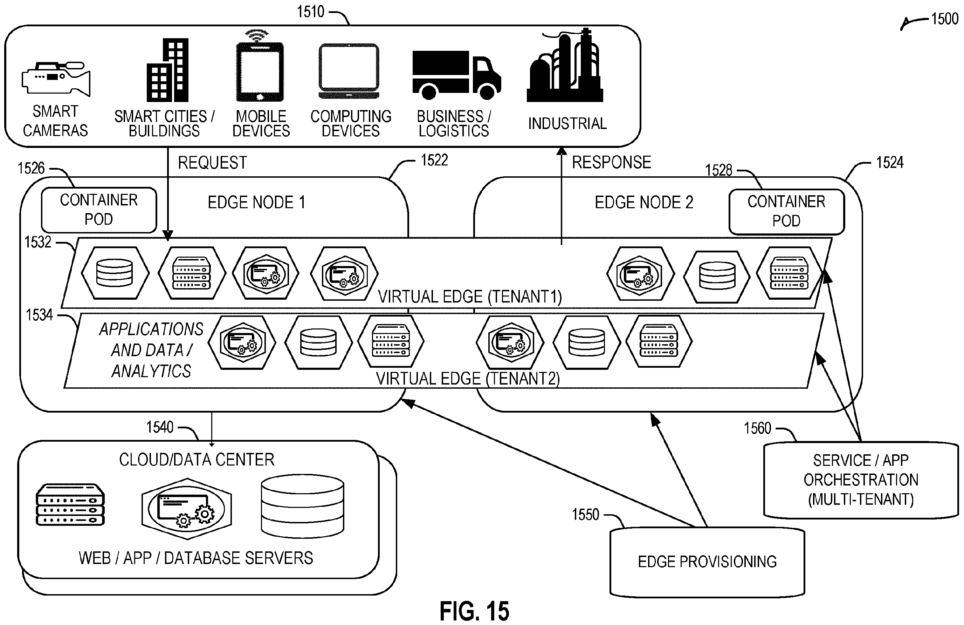

FIG. 15 illustrates deployment and orchestration for virtualized and container-based edge configurations across an edge computing system operated among multiple edge nodes and multiple tenants (e.g., users, providers) which use such edge nodes. Specifically, FIG. 15 depicts coordination of a first edge node 1522 and a second edge node 1524 in an edge computing system 1500, to fulfill requests and responses for various client endpoints 1510 (e.g., smart cameras, smart cities / building systems, mobile devices, computing devices, business/logistics systems, industrial systems, etc.), which access various virtual edge instances. Here, the virtual edge instances 1532, 1534 provide edge compute capabilities and processing in an edge cloud, with access to a cloud/data center 1540 for higher-latency requests for websites, applications, database servers, etc. However, the edge cloud enables coordination of processing among multiple edge nodes for multiple tenants or entities.

In the example of FIG. 15, these virtual edge instances include: a first virtual edge 1532, offered to a first tenant (Tenant 1), which offers a first combination of edge storage, computing, and services; and a second virtual edge 1534, offering a second combination of edge storage, computing, and services. The virtual edge instances 1532, 1534 are distributed among the edge nodes 1522, 1524, and may include scenarios in which a request and response are fulfilled from the same or different edge nodes. The configuration of the edge nodes 1522, 1524 to operate in a distributed yet coordinated fashion occurs based on edge provisioning functions 1550. The functionality of the edge nodes 1522, 1524 to provide coordinated operation for applications and services, among multiple tenants, occurs based on orchestration functions 1560.

It should be understood that some of the devices in 1510 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 1522, 1524 may operate as security feature enforcement points for local resources allocated to multiple tenants per node. Additionally, tenant runtime and application execution (e.g., in instances 1532, 1534) may serve as an enforcement point for a security feature that creates a virtual edge abstraction of resources spanning potentially multiple physical hosting platforms. Finally, the orchestration functions 1560 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes often use containers, FaaS engines, Servlets, servers, or other computation abstraction that may be partitioned according to a DICE layering and fan-out structure to support a RoT context for each. Accordingly, the respective RoTs spanning devices 1510, 1522, and 1540 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 15. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 1522, 1524 may implement the use of containers, such as with the use of a container "pod" 1526, 1528 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 1532, 1534 are partitioned according to the needs of each container.

With the use of container pods, a pod controller oversees the partitioning and allocation of containers and resources. The pod controller receives instructions from an orchestrator (e.g., orchestrator 1560) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 1560 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

### Mobility and Multi-Access Edge Computing

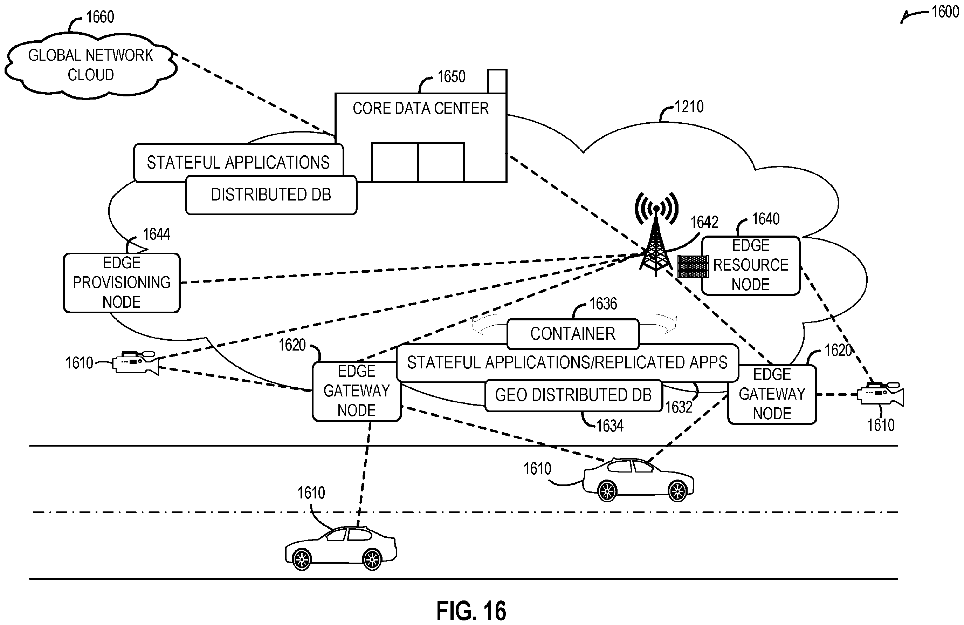

It should be appreciated that the edge computing systems and arrangements discussed herein may be applicable in various solutions, services, and/or use cases involving mobility. As an example, FIG. 16 shows a simplified vehicle compute and communication use case involving mobile access to applications in an edge computing system 1600 that implements an edge cloud 1210.

In this use case, the client compute nodes 1610 may be embodied as in-vehicle compute systems (e.g., in-vehicle navigation and/or infotainment systems) located in corresponding vehicles which communicate with the edge gateway nodes 1620 during traversal of a roadway. The respective client compute nodes 1610 may also be embodied as smart cameras mounted on, attached to, or integrated with structures having other separate mechanical utility that are located in proximity to the roadway (e.g., along the roadway, at intersections of the roadway, or other locations near the roadway), such as roadside infrastructure (e.g., street poles for streetlights or traffic lights, roadside signage, bridges), buildings, billboards, cell towers, and so forth. The client compute nodes 1610 may include an amount of processing and storage capabilities and, as such, they may perform some processing and/or storage of data themselves (e.g., processing/storage of video data captured by the smart cameras 1610). The client compute nodes 1610 may also include communication capabilities to communicate with the edge gateway nodes 1620 and/or edge resource nodes 1640.

For instance, the edge gateway nodes 1620 may be located in a roadside cabinet or other enclosure (e.g., a roadside unit (RSU)) built into a structure having other, separate, mechanical utility, which may be placed along the roadway, at intersections of the roadway, or other locations near the roadway. As respective vehicles traverse along the roadway, the connection between its client compute node 1610 and a particular edge gateway device 1620 may propagate so as to maintain a consistent connection and context for the client compute node 1610. Likewise, mobile edge nodes may aggregate at the high priority services or according to the throughput or latency resolution requirements for the underlying service(s) (e.g., in the case of drones). The respective edge gateway devices 1620 include an amount of processing and storage capabilities and, as such, some processing and/or storage of data for the client compute nodes 1610 may be performed on one or more of the edge gateway devices 1620.

The edge gateway devices 1620 may communicate with one or more edge resource nodes 1640, which are illustratively embodied as compute servers, appliances or components located at or in a communication base station 1642 (e.g., a base station of a cellular network). As discussed above, the respective edge resource nodes 1640 include an amount of processing and storage capabilities and, as such, some processing and/or storage of data for the client compute nodes 1610 may be performed on the edge resource node 1640. For example, the processing of data that is less urgent or important may be performed by the edge resource node 1640, while the processing of data that is of a higher urgency or importance may be performed by the edge gateway devices 1620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 1640 also communicate with the core data center 1650, which may include compute servers, appliances, and/or other components located in a central location (e.g., a central office of a cellular communication network). The core data center 1650 may provide a gateway to the global network cloud 1660 (e.g., the Internet) for the edge cloud 1210 operations formed by the edge resource node(s) 1640 and the edge gateway devices 1620. Additionally, in some examples, the core data center 1650 may include an amount of processing and storage capabilities and, as such, some processing and/or storage of data for the client compute devices may be performed on the core data center 1650 (e.g., processing of low urgency or importance, or high complexity).

The edge gateway nodes 1620 or the edge resource nodes 1640 may offer the use of stateful applications 1632 and a geographic distributed database 1634. Although the applications 1632 and database 1634 are illustrated as being horizontally distributed at a layer of the edge cloud 1210, it will be understood that resources, services, or other components of the application may be vertically distributed throughout the edge cloud (including, part of the application executed at the client compute node 1610, other parts at the edge gateway nodes 1620 or the edge resource nodes 1640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 1636 (or pod of containers) may be flexibly migrated from an edge node 1620 to other edge nodes (e.g., 1620, 640, etc.) such that the container with an application and workload does not need to be reconstituted, re-compiled, reinterpreted in order for migration to work. However, in such settings, there may be some remedial or "swizzling" translation operations applied. For example, the physical hardware at node 1640 may differ from edge gateway node 1620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 16 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 1620, some others at the edge resource node 1640, and others in the core data center 1650 or global network cloud 1660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 1600 can include or be in communication with an edge provisioning node 1644. The edge provisioning node 1644 can distribute software such as the example computer readable instructions 1182 of FIG. 11B, to various receiving parties for implementing any of the methods described herein. The example edge provisioning node 1644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 1644. For example, the entity that owns and/or operates the edge provisioning node 1644 may be a developer, a seller, and/or a licensor (or a customer and/or consumer thereof) of software instructions such as the example computer readable instructions 1182 of FIG. 11B. The receiving parties may be consumers, service providers, users, retailers, OEMs, etc., who purchase and/or license the software instructions for use and/or re-sale and/or sub-licensing.

In an example, edge provisioning node 1644 includes one or more servers and one or more storage devices. The storage devices host computer readable instructions such as the example computer readable instructions 1182 of FIG. 11B, as described below. Similarly to edge gateway devices 1620 described above, the one or more servers of the edge provisioning node 1644 are in communication with a base station 1642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third-party payment entity. The servers enable purchasers and/or licensors to download the computer readable instructions 1182 from the edge provisioning node 1644. For example, the software instructions, which may correspond to the example computer readable instructions 1182 of FIG. 11B, may be downloaded to the example processor platform/s, which is to execute the computer readable instructions 1182 to implement the methods described herein.

In some examples, the processor platform(s) that execute the computer readable instructions 1182 can be physically located in different geographic locations, legal jurisdictions, etc. In some examples, one or more servers of the edge provisioning node 1644 periodically offer, transmit, and/or force updates to the software instructions (e.g., the example computer readable instructions 1182 of FIG. 11B) to ensure improvements, patches, updates, etc. are distributed and applied to the software instructions implemented at the end user devices. In some examples, different components of the computer readable instructions 1182 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

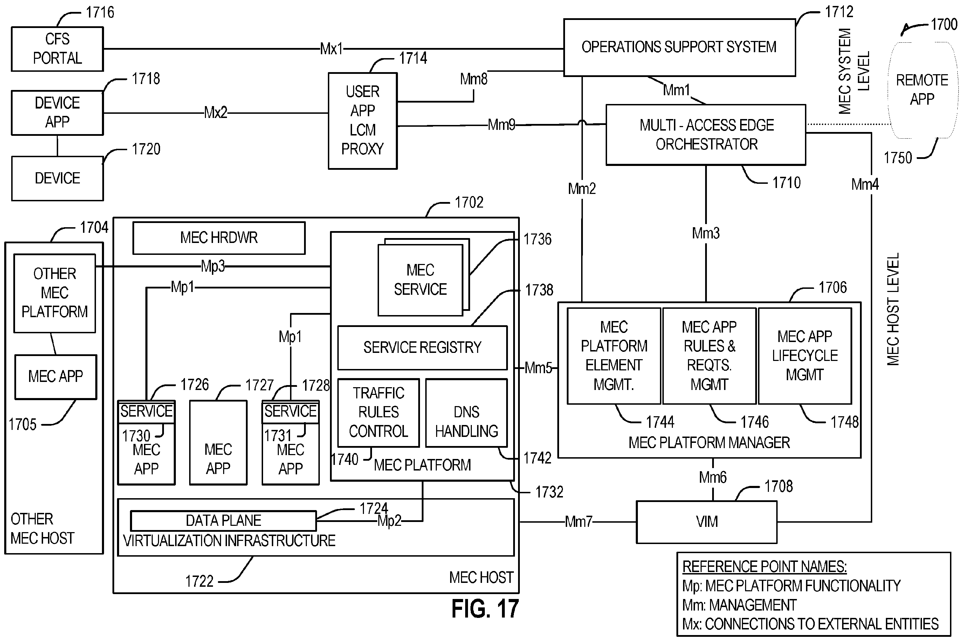

FIG. 17 illustrates a mobile edge system reference architecture (or MEC architecture) 1700, such as is indicated by ETSI MEC specifications. FIG. 17 specifically illustrates a MEC architecture 1700 with MEC hosts 1702 and 1704 providing functionalities in accordance with the ETSI GS MEC-003 specification. In some aspects, enhancements to the MEC platform 1732 and the MEC platform manager 1706 may be used for providing specific computing functions within the MEC architecture 1700, such as processing video streams (e.g., video coding, motion estimation, video analytics) on the virtualization infrastructure 1722 of MEC architecture 1700.

Referring to FIG. 17, the MEC network architecture 1700 can include MEC hosts 1702 and 1704, a virtualization infrastructure manager (VIM) 1708, an MEC platform manager 1706, an MEC orchestrator 1710, an operations support system 1712, a user app proxy 1714, a UE app 1718 running on UE 1720, and CFS portal 1716. The MEC host 1702 can include a MEC platform 1732 with filtering rules control component 1740, a DNS handling component 1742, a service registry 1738, and MEC services 1736. The MEC services 1736 can include at least one scheduler, which can be used to select resources for instantiating MEC apps (or NFVs) 1726, 1727, and 1728 upon virtualization infrastructure 1722. The MEC apps 1726 and 1728 can be configured to provide services 1730 and 1731, which can include processing network communications traffic of different types associated with one or more wireless connections (e.g., connections to one or more RAN or telecom-core network entities). The MEC app 1705 instantiated within MEC host 1704 can be similar to the MEC apps 1726-7728 instantiated within MEC host 1702. The virtualization infrastructure 1722 includes a data plane 1724 coupled to the MEC platform via an MP2 interface. Additional interfaces between various network entities of the MEC architecture 1700 are illustrated in FIG. 17.

The MEC platform manager 1706 can include MEC platform element management component 1744, MEC app rules and requirements management component 1746, and MEC app lifecycle management component 1748. The various entities within the MEC architecture 1700 can perform functionalities as disclosed by the ETSI GS MEC-003 specification.

In some aspects, the remote application (or app) 1750 is configured to communicate with the MEC host 1702 (e.g., with the MEC apps 1726-7728) via the MEC orchestrator 1710 and the MEC platform manager 1706.

### Software Distribution

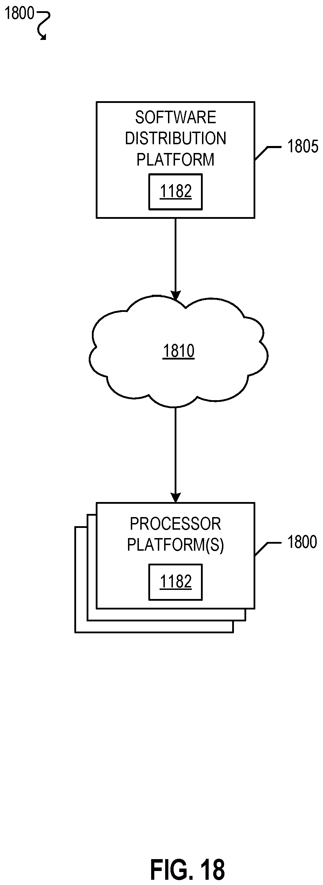

FIG. 18 illustrates an example software distribution platform 1805 to distribute software, such as the example computer readable instructions 1182 of FIG. 11B, to one or more devices, such as example processor platform(s) 1800 and/or example connected edge devices described throughout this disclosure. The example software distribution platform 1805 may be implemented by any computer server, data facility, cloud service, etc., capable of storing and transmitting software to other computing devices (e.g., third parties, example connected edge devices described throughout this disclosure). Example connected edge devices may be customers, clients, managing devices (e.g., servers), third parties (e.g., customers of an entity owning and/or operating the software distribution platform 1805). Example connected edge devices may operate in commercial and/or home automation environments. In some examples, a third party is a developer, a seller, and/or a licensor of software such as the example computer readable instructions 1182 of FIG. 11B. The third parties may be consumers, users, retailers, OEMs, etc. that purchase and/or license the software for use and/or re-sale and/or sub-licensing. In some examples, distributed software causes display of one or more user interfaces (Uls) and/or graphical user interfaces (GUIs) to identify the one or more devices (e.g., connected edge devices) geographically and/or logically separated from each other (e.g., physically separated loT devices chartered with the responsibility of water distribution control (e.g., pumps), electricity distribution control (e.g., relays), etc.).

In the illustrated example of FIG. 18, the software distribution platform 1805 includes one or more servers and one or more storage devices. The storage devices store the computer readable instructions 1182, which may implement the video processing functionality described throughout this disclosure. The one or more servers of the example software distribution platform 1805 are in communication with a network 1810, which may correspond to any one or more of the Internet and/or any of the example networks described throughout this disclosure. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1182 from the software distribution platform 1805. For example, software comprising the computer readable instructions 1182 may be downloaded to the example processor platform(s) 1800 (e.g., example connected edge devices), which is/are to execute the computer readable instructions 1182 to implement the functionality described throughout this disclosure. In some examples, one or more servers of the software distribution platform 1805 are communicatively connected to one or more security domains and/or security devices through which requests and transmissions of the example computer readable instructions 1182 must pass. In some examples, one or more servers of the software distribution platform 1805 periodically offer, transmit, and/or force updates to the software (e.g., the example computer readable instructions 1182 of FIG. 11B) to ensure improvements, patches, updates, etc. are distributed and applied to the software at the end user devices.

### Example Embodiments

Illustrative examples of the technologies described throughout this disclosure are provided below. Embodiments of these technologies may include any one or more, and any combination of, the examples described below. In some embodiments, at least one of the systems or components set forth in one or more of the preceding figures may be configured to perform one or more operations, techniques, processes, and/or methods as set forth in the following examples.

Example 1 includes a compute device, comprising: interface circuitry; and processing circuitry to: receive, via the interface circuitry, a current frame of a video stream to be encoded, wherein the video stream comprises a plurality of frames; determine whether a scene change occurs at the current frame; upon determining that the scene change occurs at the current frame, detect a scene in the current frame based on performing pixel segmentation on the current frame; upon determining that the scene change does not occur at the current frame, detect the scene in the current frame based on performing motion estimation on the current frame relative to a previous frame in which the scene was detected; generate one or more encoding parameters based on the scene detected in the current frame; and provide the one or more encoding parameters to a video encoder to encode the current frame.

Example 2 includes the compute device of Example 1, wherein the processing circuitry to determine whether the scene change occurs at the current frame is further to: detect whether the scene change occurs based on a comparison of the current frame and at least one previous frame.

Example 3 includes the compute device of Example 1, wherein the processing circuitry to detect the scene in the current frame based on performing pixel segmentation on the current frame is further to: detect one or more items in the current frame using one or more trained machine learning models; and generate a segmentation map of the scene in the current frame based on the one or more items detected in the current frame.

Example 4 includes the compute device of Example 3, wherein the one or more trained machine learning models comprise one or more convolutional neural networks trained to detect the one or more items.

Example 5 includes the compute device of Example 1, wherein the processing circuitry to detect the scene in the current frame based on performing motion estimation on the current frame relative to the previous frame in which the scene was detected is further to: determine an estimated motion of a plurality of blocks in the current frame relative to the previous frame; and detect the scene in the current frame based on: a segmentation map of the scene in the previous frame; and the estimated motion of the plurality of blocks in the current frame relative to the previous frame.

Example 6 includes the compute device of Example 1, wherein the one or more encoding parameters comprise: one or more quantization parameters; one or more encoding mode parameters; or one or more motion vector parameters.

Example 7 includes the compute device of Example 6, wherein the one or more quantization parameters comprise: a quantization parameter map, wherein the quantization parameter map indicates a plurality of quantization parameters for encoding a plurality of blocks in the current frame, wherein the plurality of quantization parameters indicates a number of bits to be allocated for encoding the plurality of blocks.

Example 8 includes the compute device of Example 6, wherein the one or more encoding mode parameters comprise: a mode map, wherein the mode map indicates a plurality of encoding modes for encoding a plurality of blocks in the current frame, wherein the plurality of encoding modes indicates a plurality of block sizes and a plurality of prediction modes for encoding the plurality of blocks.

Example 9 includes the compute device of Example 8, wherein the plurality of prediction modes comprises: one or more intra prediction modes; and one or more inter prediction modes.

Example 10 includes the compute device of Example 6, wherein the one or more motion vector parameters comprise: a motion vector map, wherein the motion vector map indicates a plurality of motion vectors for encoding a plurality of blocks in the current frame, wherein the plurality of motion vectors indicate an estimated motion of the plurality of blocks relative to the previous frame.

Example 11 includes the compute device of Example 1, wherein the processing circuitry comprises the video encoder to: encode the current frame based on the one or more encoding parameters.

Example 12 includes the compute device of Example 1, wherein the compute device is: an artificial intelligence accelerator; a vision processing unit; a media enhancement unit; a smart camera; a user device; an Internet-of-Things device; or an edge server appliance.

Example 13 includes at least one non-transitory machine-readable storage medium having instructions stored thereon, wherein the instructions, when executed on processing circuitry, cause the processing circuitry to: receive a current frame of a video stream to be encoded, wherein the video stream comprises a plurality of frames; determine whether a scene change occurs at the current frame; upon determining that the scene change occurs at the current frame, detect a scene in the current frame based on performing pixel segmentation on the current frame; upon determining that the scene change does not occur at the current frame, detect the scene in the current frame based on performing motion estimation on the current frame relative to a previous frame in which the scene was detected; generate one or more encoding parameters based on the scene detected in the current frame; and encode the current frame based on the one or more encoding parameters.

Example 14 includes the storage medium of Example 13, wherein the instructions that cause the processing circuitry to detect the scene in the current frame based on performing pixel segmentation on the current frame further cause the processing circuitry to: detect one or more items in the current frame using one or more trained machine learning models; and generate a segmentation map of the scene in the current frame based on the one or more items detected in the current frame.

Example 15 includes the storage medium of Example 13, wherein the instructions that cause the processing circuitry to detect the scene in the current frame based on performing motion estimation on the current frame relative to the previous frame in which the scene was detected further cause the processing circuitry to: determine an estimated motion of a plurality of blocks in the current frame relative to the previous frame; and detect the scene in the current frame based on: a segmentation map of the scene in the previous frame; and the estimated motion of the plurality of blocks in the current frame relative to the previous frame.

Example 16 includes the storage medium of Example 13, wherein the one or more encoding parameters comprise: a plurality of quantization parameters for encoding a plurality of blocks in the current frame, wherein the plurality of quantization parameters indicates a number of bits to be allocated for encoding the plurality of blocks.

Example 17 includes the storage medium of Example 13, wherein the one or more encoding parameters comprise: a plurality of encoding modes for encoding a plurality of blocks in the current frame, wherein the plurality of encoding modes indicates a plurality of block sizes and a plurality of prediction modes for encoding the plurality of blocks.

Example 18 includes the storage medium of Example 17, wherein the plurality of prediction modes comprises: one or more intra prediction modes; and one or more inter prediction modes.

Example 19 includes the storage medium of Example 13, wherein the one or more encoding parameters comprise: a plurality of motion vectors for encoding a plurality of blocks in the current frame, wherein the plurality of motion vectors indicate an estimated motion of the plurality of blocks relative to the previous frame.

Example 20 includes a method, comprising: receiving a current frame of a video stream to be encoded, wherein the video stream comprises a plurality of frames; determining whether a scene change occurs at the current frame; upon determining that the scene change occurs at the current frame, detecting a scene in the current frame based on performing pixel segmentation on the current frame; upon determining that the scene change does not occur at the current frame, detecting the scene in the current frame based on performing motion estimation on the current frame relative to a previous frame in which the scene was detected; generating one or more encoding parameters based on the scene detected in the current frame; and encoding the current frame based on the one or more encoding parameters.

Example 21 includes the method of Example 20, wherein detecting the scene in the current frame based on performing pixel segmentation on the current frame comprises: detecting one or more items in the current frame using one or more trained machine learning models; and generating a segmentation map of the scene in the current frame based on the one or more items detected in the current frame.

Example 22 includes the method of Example 20, wherein detecting the scene in the current frame based on performing motion estimation on the current frame relative to the previous frame in which the scene was detected comprises: determining an estimated motion of a plurality of blocks in the current frame relative to the previous frame; and detecting the scene in the current frame based on: a segmentation map of the scene in the previous frame; and the estimated motion of the plurality of blocks in the current frame relative to the previous frame.

Example 23 includes a system, comprising: interface circuitry; and processing circuitry to: receive, via the interface circuitry, a current frame of a video stream to be encoded, wherein the video stream comprises a plurality of frames; determine whether a scene change occurs at the current frame; upon determining that the scene change occurs at the current frame, detect a scene in the current frame based on performing pixel segmentation on the current frame; upon determining that the scene change does not occur at the current frame, detect the scene in the current frame based on performing motion estimation on the current frame relative to a previous frame in which the scene was detected; generate one or more encoding parameters based on the scene detected in the current frame; and encode the current frame based on the one or more encoding parameters.

Example 24 includes the system of Example 23, wherein the processing circuitry comprises: an artificial intelligence accelerator to detect the scene in the current frame based on performing pixel segmentation on the current frame; and a video encoder to encode the current frame based on the one or more encoding parameters.

Example 25 includes the system of Example 23, wherein the system is: a smart camera; a user device; an Internet-of-Things device; or an edge server appliance.

While the concepts of the present disclosure are susceptible to various modifications and alternative forms, specific embodiments thereof have been shown by way of example in the drawings and are described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

## Claims

1. A method, comprising:
receiving a current frame of a video stream to be encoded, wherein the video stream comprises a plurality of frames;
determining whether a scene change occurs at the current frame;
upon determining that the scene change occurs at the current frame, detecting a scene in the current frame based on performing pixel segmentation on the current frame;
upon determining that the scene change does not occur at the current frame, detecting the scene in the current frame based on performing motion estimation on the current frame relative to a previous frame in which the scene was detected;
generating one or more encoding parameters based on the scene detected in the current frame; and
providing the one or more encoding parameters to a video encoder to encode the current frame.

2. The method of Claim 1, wherein determining whether the scene change occurs at the current frame comprises:
detecting whether the scene change occurs based on a comparison of the current frame and at least one previous frame.

3. The method of any of Claims 1-2, wherein detecting the scene in the current frame based on performing pixel segmentation on the current frame comprises:
detecting one or more items in the current frame using one or more trained machine learning models; and
generating a segmentation map of the scene in the current frame based on the one or more items detected in the current frame.

4. The method of Claim 3, wherein the one or more trained machine learning models comprise one or more convolutional neural networks trained to detect the one or more items.

5. The method of any of Claims 1-4, wherein detecting the scene in the current frame based on performing motion estimation on the current frame relative to the previous frame in which the scene was detected comprises:
determining an estimated motion of a plurality of blocks in the current frame relative to the previous frame; and
detecting the scene in the current frame based on:
a segmentation map of the scene in the previous frame; and
the estimated motion of the plurality of blocks in the current frame relative to the previous frame.

6. The method of any of Claims 1-5, wherein the one or more encoding parameters comprise:
one or more quantization parameters;
one or more encoding mode parameters; or
one or more motion vector parameters.

7. The method of Claim 6, wherein the one or more quantization parameters comprise:
a quantization parameter map, wherein the quantization parameter map indicates a plurality of quantization parameters for encoding a plurality of blocks in the current frame, wherein the plurality of quantization parameters indicates a number of bits to be allocated for encoding the plurality of blocks.

8. The method of any of Claims 6-7, wherein the one or more encoding mode parameters comprise:
a mode map, wherein the mode map indicates a plurality of encoding modes for encoding a plurality of blocks in the current frame, wherein the plurality of encoding modes indicates a plurality of block sizes and a plurality of prediction modes for encoding the plurality of blocks.

9. The method of Claim 8, wherein the plurality of prediction modes comprises:
one or more intra prediction modes; and
one or more inter prediction modes.

10. The method of any of Claims 6-9, wherein the one or more motion vector parameters comprise:
a motion vector map, wherein the motion vector map indicates a plurality of motion vectors for encoding a plurality of blocks in the current frame, wherein the plurality of motion vectors indicate an estimated motion of the plurality of blocks relative to the previous frame.

11. The method of any of Claims 1-10, further comprising:
encoding, using the video encoder, the current frame based on the one or more encoding parameters.

12. The method of any of Claims 1-11, wherein the method is performed by:
an artificial intelligence accelerator;
a vision processing unit;
a media enhancement unit;
a smart camera;
a user device;
an Internet-of-Things device; or
an edge server appliance.

13. An apparatus comprising means to perform a method as claimed in any preceding claim.

14. At least one machine-accessible storage medium having instructions stored thereon, wherein the instructions, when executed on a machine, cause the machine to perform a method or realize an apparatus as claimed in any preceding claim.
